(19) Europäisches Patentamt / European Patent Office / Office européen des brevets

(11) EP 1 476 501 B1

(12) # EUROPÄISCHE PATENTSCHRIFT

(45) Veröffentlichungstag und Bekanntmachung des Hinweises auf die Patenterteilung:
**29.08.2007 Patentblatt 2007/35**

(21) Anmeldenummer: **03737290.1**

(22) Anmeldetag: **30.01.2003**

(51) Int Cl.:
***C08J 9/30*** *(2006.01)* ***C08J 9/28*** *(2006.01)*

(86) Internationale Anmeldenummer:
**PCT/EP2003/000927**

(87) Internationale Veröffentlichungsnummer:
**WO 2003/066716 (14.08.2003 Gazette 2003/33)**

(54) **SCHAUMSTOFFE AUS WASSERABSORBIERENDEN BASISCHEN POLYMEREN, VERFAHREN ZU IHRER HERSTELLUNG UND IHRE VERWENDUNG**

FOAMS MADE FROM WATER-ABSORBING, BASIC POLYMERS, METHOD FOR THE PRODUCTION AND UTILIZATION THEREOF

MOUSSES CONSTITUEES DE POLYMERES DE BASE ABSORBANT L'EAU, PROCEDE DE PREPARATION ASSOCIE ET UTILISATION DE CES MOUSSES

(84) Benannte Vertragsstaaten:
**AT BE BG CH CY CZ DE DK EE ES FI FR GB GR HU IE IT LI LU MC NL PT SE SI SK TR**

(30) Priorität: **06.02.2002 DE 10204980**

(43) Veröffentlichungstag der Anmeldung:
**17.11.2004 Patentblatt 2004/47**

(73) Patentinhaber: **BASF Aktiengesellschaft**
**67056 Ludwigshafen (DE)**

(72) Erfinder:
- **CHAMP, Samantha**
  **67063 Ludwigshafen (DE)**
- **HÄHNLE, Hans-Joachim**
  **67435 Neustadt (DE)**
- **BECK, Martin**
  **67133 Maxdorf (DE)**
- **FUNK, Rüdiger**
  **65527 Niedernhausen (DE)**

(56) Entgegenhaltungen:
**US-A- 5 962 578** **US-A- 6 025 404**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Schaumstoffe aus wasserabsorbierenden basischen Polymeren, Verfahren zu ihrer Herstellung und ihre Verwendung in Hygieneartikeln.

Wasserabsorbierende, überwiegend offenzellige Schäume auf Basis von vernetzten Säuregruppen enthaltenden Monomeren sind bekannt, vgl. EP-B-0 858 478, WO-A-99/44648 und WO-A-00/52087. Sie werden beispielsweise durch Schäumen einer polymerisierbaren wäßrigen Mischung, die zu mindestens 50 Mol-% neutralisierte, Säuregruppen enthaltende monoethylenisch ungesättigte Monomere, Vernetzer und mindestens ein Tensid enthalten, und anschließendes Polymerisieren der geschäumten Mischung hergestellt. Das Schäumen der polymerisierbaren Mischung kann z.B. durch Dispergieren von feinen Blasen eines gegenüber Radikalen inerten Gases oder durch Lösen eines solchen Gases unter erhöhtem Druck in der polymerisierbaren Mischung und Entspannen der Mischung erfolgen. Der Wassergehalt der Schaumstoffe wird auf beispielsweise 1 bis 60 Gew.-% eingestellt. Die Schäume können gegebenenfalls einer Oberflächennachvernetzung unterworfen werden, indem man einen Vernetzer auf das geschäumte Material sprüht oder den Schaum darin eintaucht und den mit Vernetzer beladenen Schaum auf eine höhere Temperatur erhitzt. Die Schäume werden z.B. in Hygieneartikeln zur Akquisition, Distribution und Speicherung von Körperflüssigkeiten verwendet.

Aus der WO-A-97/31600 ist ein Absorberelement für den Einsatz in Hygiene- oder Sanitärartikeln bekannt, wobei mehrere Elemente aus einem superabsorbierenden Schaum rasterförmig auf einem Träger in solchen Abständen angeordnet sind, daß sich die Elemente in gequollenem Zustand an ihren Umfängen berühren. Man kann beispielsweise einen Monomerschaum in dem gewünschten Rastermuster auf den Träger aufbringen und anschließend darauf polymerisieren oder separat hergestellte Schaumelemente auf dem Träger chemisch oder physikalisch in dem gewünschten Rastermuster fixieren. Die Permeabilität der superabsorbierenden Schäume ist jedoch noch verbesserungsbedürftig.

Aus der US-A-5,981,689 und der US-A-6,121,409 sind wasserabsorbierende Materialien auf Basis von Polyvinylamingelen bekannt. Diese Materialien bestehen im Wesentlichen aus einer Mischung von teilchenförmigen Polymeren aus einem geringfügig vernetztem basischen Polymeren, das gegebenenfalls an der Oberfläche nachvernetzt ist, und einem sauren Polymeren, wobei die Polymeren jeweils in der Polyelektrolytform Wasser absorbieren. Beispiele für solche absorbierenden Produkte sind Mischungen von Teilchen aus geringfügig vernetztem Polyvinylamin in Form der freien Base mit Teilchen aus geringfügig vernetzter Polyacrylsäure in Form der freien Säure. Wie aus der US-A-5,981,689 außerdem hervorgeht, können Salze vernetzter Polyvinylamine als wasserabsorbierende Polymere verwendet werden.

Aus der US-A-5,962,578 sind ebenfalls wasserabsorbierende Materialien aus einer Mischung von Teilchen aus einem vernetzten basischen Polymeren und Teilchen aus einem sauren wasserabsorbierenden Polymeren bekannt. Als basisches Polymer werden geringfügig vernetzte Polymerisate von Dialkylaminoalkyl(meth)acryl-amiden genannt. Auch teilchenförmige, schwach vernetzte Polymerisate von Polyvinylguanidinen können als basische Polymere in Mischung mit teilchenförmigen sauren wasserabsorbierenden Polymeren verwendet werden, vgl. US-A-6,087448.

Aus der US-B-6,222,091 sind wasserabsorbierende Gelteilchen bekannt, die innerhalb eines einzigen Teilchens Mikrodomänen eines sauren wasserabsorbierenden Harzes und eines basischen wasserabsorbierenden Harzes enthalten. Die oben beschriebenen wasserabsorbierenden Materialien werden beispielsweise in Hygieneartikeln zur Aufnahme von Körperflüssigkeiten verwendet.

Aus der WO-A-00/63295 sind ebenfalls Hydrogele bildende teilchenförmige Mischungen bekannt, die aus einem schwach vernetztem basischen Polymer und einem schwach vernetztem sauren Polymer bestehen.

Aus der US-A-6,025,404 sind Schaumstoffe bekannt, die durch Aufschäumen einer Polymerdispersion erhalten werden. Dabei werden die Polymerketten im Schaumstoff durch ionische Wechselwirkungen der Polymerketten untereinander fixiert.

Der vorliegenden Erfindung liegt die Aufgabe zugrunde, wasserabsorbierende Artikel mit einer hohen Absorptionskapazität, einer verbesserten Permeabilität und einer verbesserten Distribution zur Verfügung zu stellen.

Die Aufgabe wird erfindungsgemäß gelöst mit überwiegend offenzelligen Schaumstoffen aus wasserabsorbierenden basischen Polymeren, wobei die Schaumstoffe herstellbar sind durch

(I) Schäumen einer vernetzbaren wäßrigen Mischung, die

- (a) mindestens ein basisches Polymer, dessen basische Gruppen gegebenenfalls neutralisiert sind,
- (b) mindestens einen Vernetzer,
- (c) mindestens ein Tensid,
- (d) gegebenenfalls mindestens einen Lösevermittler und
- (e) gegebenenfalls Verdicker, Schaumstabilisatoren, Füllstoffe, Fasern und/oder Zellkeimbildner und
- (f) gegebenenfalls teilchenförmige wasserabsorbierende saure Polymere

enthält, wobei man zum Schäumen ein gegenüber Radikalen inertes Gas unter einem Druck von 2 bis 400 bar in der vernetzbaren wäßrigen Mischung löst und sie anschließend auf Atmosphärendruck entspannt oder wobei das Schäumen durch Dispergieren von feinen Blasen eines gegenüber Radikalen inerten Gases erfolgt, und

(II) Vernetzen der geschäumten Mischung unter Bildung eines schaumförmigen Hydrogels und gegebenenfalls Einstellen des Wassergehalts des schaumförmigen Polymerisats auf 1 bis 60 Gew.-%.

Gegenstand der Erfindung ist außerdem ein Verfahren zur Herstellung von Schaumstoffen aus wasserabsorbierenden basischen Polymeren, wobei man

(I) eine vernetzbare wäßrige Mischung schäumt, die

(a) mindestens ein basisches Polymer, dessen basische Gruppen gegebenenfalls neutralisiert sind,
(b) mindestens einen Vernetzer,
(c) mindestens ein Tensid,
(d) gegebenenfalls mindestens einen Lösevermittler,
(e) gegebenenfalls Verdicker, Schaumstabilisatoren, Füllstoffe, Fasern und/oder Zellkeimbildner und
(f) gegebenenfalls teilchenförmige, wasserabsorbierende saure Polymere

enthält, wobei man zum Schäumen ein gegenüber Radikalen inertes Gas unter einem Druck von 2 bis 400 bar in der vernetzbaren wäßrigen Mischung löst und sie anschließend auf Atmosphärendruck entspannt oder wobei das Schäumen durch Dispergieren von feinen Blasen eines gegenüber Radikalen inerten Gases erfolgt, und

(II) die geschäumten Mischung unter Bildung eines
schaumförmigen Hydrogels vernetzt und gegebenenfalls den Wassergehalt des schaumförmigen Polymerisats auf 1 bis 60 Gew.-% einstellt.

(a) Basische Polymere

Als basische Polymere kommen beispielsweise Vinylamineinheiten enthaltende Polymere, Vinylguanidineinheiten enthaltende Polymere, Dialkylaminoalkyl(meth)acrylamideinheiten enthaltende Polymere, Polyethylenimine, mit Ethylenimin gepfropfte Polyamidoamine und Polydiallyldimethylammoniumchloride in Betracht.

Vinylamineinheiten enthaltende Polymere sind bekannt, vgl. US-A-4,421,602, US-A-5,334,287, EP-A-0 216 387, US-A-5,981,689, WO-A-00/63295 und US-A-6,121,409. Sie werden durch Hydrolyse von offenkettigen N-Vinylcarbonsäureamideinheiten enthaltenden Polymeren hergestellt. Diese Polymeren sind z.B. erhältlich durch Polymerisieren von N-Vinylformamid, N-Vinyl-N-methylformamid. N-Vinylacetamid, N-Vinyl-N-methylacetamid, N-Vinyl-N-ethylacetamid und N-Vinylpropionamid. Die genannten Monomeren können entweder allein oder zusammen mit anderen Monomeren polymerisiert werden.

Als monoethylenisch ungesättigte Monomere, die mit den N-Vinylcarbonsäureamiden copolymerisiert werden, kommen alle damit copolymerisierbaren Verbindungen in Betracht. Beispiele hierfür sind Vinylester von gesättigten Carbonsäuren von 1 bis 6 Kohlenstoffatomen wie Vinylformiat, Vinylacetat, Vinylpropionat und Vinylbutyrat und Vinylether wie $C_1$- bis $C_6$-Alkylvinylether, z.B. Methyl- oder Ethylvinylether. Weitere geeignete Comonomere sind Ester, Amide und Nitrile von ethylenisch ungesättigten $C_3$- bis $C_6$-Carbonsäuren, beispielsweise Methylacrylat, Methylmethacrylat, Ethylacrylat und Ethylmethacrylat, Acrylamid und Methacrylamid sowie Acrylnitril und Methacrylnitril.

Weitere geeignete Carbonsäureester leiten sich von Glykolen oder bzw. Polyalkylenglykolen ab, wobei jeweils nur eine OH-Gruppe verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie Acrylsäuremonoester von Polyalkylenglykolen einer Molmasse von 500 bis 10000. Weitere geeignete Comonomere sind Ester von ethylenisch ungesättigten Carbonsäuren mit Aminoalkoholen wie beispielsweise Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Dimethylaminobutylacrylat und Diethylaminobutylacrylat. Die basischen Acrylate können in Form der freien Basen, der Salze mit Mineralsäuren wie Salzsäure, Schwefelsäure oder Salpetersäure, der Salze mit organischen Säuren wie Ameisensäure, Essigsäure, Propionsäure oder der Sulfonsäuren oder in quaternierter Form eingesetzt werden. Geeignete Quaternierungsmittel sind beispielsweise Dimethylsulfat, Diethylsulfat, Methylchlorid, Ethylchlorid oder Benzylchlorid.

Weitere geeignete Comonomere sind Amide ethylenisch ungesättigter Carbonsäuren wie Acrylamid, Methacrylamid sowie N-Alkylmono- und Diamide von monoethylenisch ungesättigten Carbonsäuren mit Alkylresten von 1 bis 6 C-Atomen, z.B. N-Methylacrylamid, N,N-Dimethylacrylamid, N-Methylmethacrylamid, N-Ethylacrylamid, N-Propylacrylamid und tert. Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethylaminopropylacrylamid, Dimethylaminopropylmethacrylamid und Diethylaminopropylmethacrylamid.

Weiterhin sind als Comonomere geeignet N-Vinylpyrrolidon, N-Vinylcaprolactam, Acrylnitril, Methacrylnitril, N-Vinylimidazol sowie substituierte N-Vinylimidazole wie z.B. N-Vinyl-2-methylimidazol, N-Vinyl-4-methylimidazol, N-Vinyl-5-methylimidazol, N-Vinyl-2-ethylimidazol und N-Vinylimidazoline wie N-Vinylimidazolin, N-Vinyl-2-methylimidazolin und N-Vinyl-2-ethylimidazolin. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat, Methylchlorid oder Benzylchlorid vorgenommen wird. In Frage kommen auch Diallyldialkylammoniumhalogenide wie z.B. Diallyldimethylammoniumchlorid.

Die Copolymerisate enthalten beispielsweise

- 95 bis 5 mol-%, vorzugsweise 90 bis 10 mol-% mindestens eines N-Vinylcarbonsäureamids und
- 5 bis 95 mol-%, vorzugsweise 10 bis 90 mol-% andere, damit copolymerisierbare monoethylenisch ungesättigte Monomere

in einpolymerisierter Form. Die Comonomeren sind vorzugsweise frei von Säuregruppen.

Um Vinylamineinheiten enthaltende Polymerisate herzustellen, geht man vorzugsweise von Homopolymerisaten des N-Vinylformamids oder von Copolymerisaten aus, die durch Copolymerisieren von

- N-Vinylformamid mit
- Vinylformiat, Vinylacetat, Vinylpropionat, Acrylnitril, N-Vinylcaprolactam, N-Vinylharnstoff, N-Vinylpyrrolidon oder $C_1$-bis $C_6$-Alkylvinylethern

und anschließende Hydrolyse der Homo- oder der Copolymerisate unter Bildung von Vinylamineinheiten aus den einpolymerisierten N-Vinylformamideinheiten erhältlich sind, wobei der Hydrolysegrad z.B. 5 bis 100 mol-%, vorzugsweise 70 bis 100 mol-% beträgt. Die Hydrolyse der oben beschriebenen Polymerisate erfolgt nach bekannten Verfahren durch Einwirkung von Säuren, Basen oder Enzymen. Bei Verwendung von Säuren als Hydrolysemittel liegen die Vinylamineinheiten der Polymerisate als Ammoniumsalz vor, während bei der Hydrolyse mit Basen die freie Aminogruppen entstehen.

Die Homopolymerisate der N-Vinylcarbonsäureamide und ihre Copolymerisate können zu 5 bis 100, vorzugsweise 70 bis 100 mol-% hydrolysiert sein. In den meisten Fällen beträgt der Hydrolysegrad der Homo- und Copolymerisate 80 bis 95 mol-%. Der Hydrolysegrad der Homopolymerisate ist gleichbedeutend mit dem Gehalt der Polymerisate an Vinylamineinheiten. Bei Copolymerisaten, die Vinylester einpolymerisiert enthalten, kann neben der Hydrolyse der N-Vinylformamideinheiten eine Hydrolyse der Estergruppen unter Bildung von Vinylalkoholeinheiten eintreten. Dies ist insbesondere dann der Fall, wenn man die Hydrolyse der Copolymerisate in Gegenwart von Natronlauge durchführt. Einpolymerisiertes Acrylnitril wird ebenfalls bei der Hydrolyse chemisch verändert. Hierbei entstehen beispielsweise Amidgruppen oder Carboxylgruppen. Die Vinylamineinheiten enthaltenden Homo- und Copolymeren können gegebenenfalls bis zu 20 mol-% an Amidineinheiten enthalten, die z.B. durch Reaktion von Ameisensäure mit zwei benachbarten Aminogruppen oder durch intramolekulare Reaktion einer Aminogruppe mit einer benachbarten Amidgruppe z.B. von einpolymerisiertem N-Vinylformamid entsteht. Die Molmassen der Vinylamineinheiten enthaltenden Polymerisate betragen z.B. 500 bis 10 Millionen, vorzugsweise 1000 bis 5 Millionen (bestimmt durch Lichtstreuung). Dieser Molmassenbereich entspricht beispielsweise K-Werten von 5 bis 300, vorzugsweise 10 bis 250 (bestimmt nach H. Fikentscher in 5 %iger wässriger Kochsalzlösung bei 25°C und einer Polymerkonzentration von 0,5 Gew.-%).

Die Vinylamineinheiten enthaltenden Polymeren werden vorzugsweise in salzfreier Form eingesetzt. Salzfreie wässrige Lösungen von Vinylamineinheiten enthaltenden Polymerisaten können beispielsweise aus den oben beschriebenen salzhaltigen Polymerlösungen mit Hilfe einer Ultrafiltration an geeigneten Membranen bei Trenngrenzen von beispielsweise 1000 bis 500 000 Dalton, vorzugsweise 10 000 bis 300 000 Dalton hergestellt werden. Auch die unten beschriebenen wässrigen Lösungen von Amino- und/oder Ammoniumgruppen enthaltenden anderen Polymeren können mit Hilfe einer Ultrafiltration in salzfreier Form gewonnen werden.

Auch Derivate von Vinylamineinheiten enthaltenden Polymeren können als basische Hydrogele bildende Polymere eingesetzt werden. So ist es beispielsweise möglich, aus den Vinylamineinheiten enthaltenden Polymeren durch Amidierung, Alkylierung, Sulfonamidbildung, Harnstoffbildung, Thioharnstoffbildung, Carbamatbildung, Acylierung, Carboximethylierung, Phosphonomethylierung oder Michaeladdition der Aminogruppen des Polymeren eine Vielzahl von geeigneten Hydrogelderivaten herzustellen. Von besonderem Interesse sind hierbei unvernetzte Polyvinylguanidine, die durch Reaktion von Vinylamineinheiten enthaltenden Polymeren, vorzugsweise Polyvinylaminen, mit Cyanamid ($R^1R^2N$-CN, wobei $R^1$ ,R2 = H, C1-bis C4-Alkyl, C3- bis C6-Cycloalkyl, Phenyl, Benzyl, alkylsubstituiertes Phenyl oder

Naphthyl bedeuten) zugänglich sind, vgl. US-A-6,087,448, Spalte 3, Zeile 64 bis Spalte 5, Zeile 14.

Zu den Vinylamineinheiten enthaltenden Polymeren gehören auch hydrolysierte Pfropfpolymerisate von beispielsweise N-Vinylformamid auf Polyalkylenglkolen, Polyvinylacetat, Polyvinylalkolhol, Polyvinylformamiden, Polysacchariden wie Stärke, Oligosacchariden oder Monosacchariden. Die Pfropfpolymerisate sind dadurch erhältlich, daß man beispielsweise N-Vinylformamid in wäßrigem Medium in Gegenwart mindestens einer der genannten Pfropfgrundlagen gegebenenfalls zusammen mit copolymerisierbaren anderen Monomeren radikalisch polymerisiert und die aufgepfropften Vinylformamideinheiten anschließend in bekannten Weise zu Vinylamineinheiten hydrolysiert.

Für die Herstellung wasserabsorbierender basischer Polymere kommen auch Polymerisate von Dialkylaminoalkyl(meth)acrylamiden in Betracht. Geeignete Monomere für die Herstellung solcher Polymere sind beispielsweise Dimethylaminoethylacrylamid, Dimethylaminoethylmethacrylamid, Dimethylaminopropylacrylamid, Dimethylaminopropylmethacrylamid, Diethylaminoethylacrylamid, Diethylaminoethylmethacrylamid und Diethylaminopropylacrylamid. Diese Monomeren können in Form der freien Basen, der Salze mit anorganischen oder organischen Säuren oder in quaternisierter Form bei der Polymerisation eingesetzt werden. Sie können zu Homopolymerisaten oder zusammen mit anderen copolymerisierbaren Monomeren zu Copolymerisaten radikalisch polymerisiert werden. Die Polymerisate enthalten beispielsweise mindestens 30 Mol-%, vorzugsweise mindestens 70 Mol-.% der der genannten basischen Monomeren einpolymerisiert. Wasserabsorbierende basische Polymere auf Basis von Poly(Dimethylaminoalkylacrylamiden) sind aus der US-A-5,962,578 bekannt.

Weitere geeignete basische Polymere sind Polyethylenimine, die beispielsweise durch Polymerisation von Ethylenimin in wässriger Lösung in Gegenwart von säureabspaltenden Verbindungen, Säuren oder Lewis-Säuren als Katalysator hergestellbar sind. Polyethylenimine haben beispielsweise Molmassen bis zu 2 Millionen, vorzugsweise von 200 bis 1.000 000. Besonders bevorzugt werden Polyethylenimine mit Molmassen von 500 bis 750 000 eingesetzt. Die Polyethylenimine können gegebenenfalls modifiziert werden, z.B. alkoxyliert, alkyliert oder amidiert werden. Sie können au-Berdem einer Michaeladdition oder einer Steckersynthese unterworfen werden. Die dabei erhältlichen Derivate von Polyethyleniminen sind ebenfalls als basische Polymere zur Herstellung von wasserabsorbierenden basischen Polymeren geeignet.

Außerdem kommen mit Ethylenimin gepfropfte Polyamidoamine in Betracht, die beispielsweise durch Kondensieren von Dicarbonsäuren mit Polyaminen und anschließendes Aufpfropfen von Ethylenimin erhältlich sind. Geeignete Polyamidoamine erhält man beispielsweise dadurch, daß man Dicarbonsäuren mit 4 bis 10 Kohlenstoffatomen mit Polyalkylenpolyaminen umsetzt, die 3 bis 10 basische Stickstoffatome im Molekül enthalten. Beispiele für Dicarbonsäuren sind Bernsteinsäure, Maleinsäure, Adipinsäure, Glutarsäure, Korksäure, Sebacinsäure oder Terephthalsäure. Bei der Herstellung der Polyamidoamine kann man auch Mischungen von Dicarbonsäuren einsetzen, ebenso Mischungen aus mehreren Polyalkylenpolyaminen. Geeignete Polyalkylenpolyamine sind beispielsweise Diethylentriamin, Triethylentetramin, Tetraethylenpentamin, Dipropylentriamin, Tripropylentetramin, Dihexamethylentriamin, Aminopropylethylendiamin und Bis-aminopropylethylendiamin. Die Dicarbonsäuren und Polyalkylenpolyamine werden zur Herstellung der Polyamidoamine auf höhere Temperaturen erhitzt, z.B. auf Temperaturen in dem Bereich von 120 bis 220, vorzugsweise 130 bis 180°C. Das bei der Kondensation entstehende Wasser wird aus dem System entfernt. Bei der Kondensation kann man gegebenenfalls auch Lactone oder Lactame von Carbonsäuren mit 4 bis 8 C-Atomen einsetzen. Pro Mol einer Dicarbonsäure verwendet man beispielsweise 0,8 bis 1,4 Mol eines Polyalkylenpolyamins. Diese Polyamidoamine werden mit Ethylenimin gepfropft. Die Pfropfreaktion wird beispielsweise in Gegenwart von Säuren oder Lewis-Säuren wie Schwefelsäure oder Bortrifluoridetheraten bei Temperaturen von beispielsweise 80 bis 100°C durchgeführt. Verbindungen dieser Art werden beispielsweise in der DE-B-24 34 816 beschrieben.

Auch die gegebenenfalls vernetzten Polyamidoamine, die gegebenenfalls noch zusätzlich vor der Vernetzung mit Ethylenimin gepfropft sind, kommen als basische Polymere in Betracht. Die vernetzten, mit Ethylenimin gepfropften Polyamidoamine sind wasserlöslich und haben z.B. ein mittleres Molgewicht von 3000 bis 2 Million Dalton. Übliche Vernetzer sind z.B. Epichlorhydrin oder Bischlorhydrinether von Alkylenglykolen und Polyalkylenglykolen.

Als basische Polymere kommen auch Polyallylamine in Betracht. Polymerisate dieser Art werden erhalten durch Homopolymerisation von Allylamin, vorzugsweise in mit Säuren neutralisierter Form oder durch Copolymerisieren von Allylamin mit anderen monoethylenisch ungesättigten Monomeren, die oben als Comonomere für N-Vinylcarbonsäureamide beschrieben sind.

Außerdem eignen sich wasserlösliche vernetzte Polyethylenimine, die durch Reaktion von Polyethyleniminen mit Vernetzern wie Epichlorhydrin oder Bischlorhydrinethern von Polyalkylenglykolen mit 2 bis 100 Ethylenoxid- und/oder Propylenoxid-Einheiten erhältlich sind und noch über freie primäre und/oder sekundäre Aminogruppen verfügen. Auch amidische Polyethylenimine sind geeignet, die beispielsweise durch Amidierung von Polyethyleniminen mit $C_1$- bis $C_{22}$-Monocarbonsäuren erhältlich sind. Weitere geeignete kationische Polymere sind alkylierte Polyethylenimine und alkoxylierte Polyethylenimine. Bei der Alkoxylierung verwendet man z.B. pro NH-Einheit im Polyethylenimin 1 bis 5 Ethylenoxid- bzw. Propylenoxideinheiten.

Die obengenannten basischen Polymerisate haben z.B. K-Werte von 8 bis 300, vorzugsweise 15 bis 180 (bestimmt nach H. Fikentscher in 5 %iger wässriger Kochsalzlösung bei 25 % und einer Polymerkonzentration von 0,5

Gew.-%). Bei einem pH-Wert von 4,5 haben sie beispielsweise eine Ladungsdichte von mindestens 1, vorzugsweise mindestens 4 mVal/g Polyelektrolyt.

Bevorzugt in Betracht kommende basische Polymere sind Vinylamineinheiten enthaltende Polymere, Polyvinylguanidine und Polyethylenimine. Beispiele hierfür sind:

Vinylamin-Homopolymere, 10 bis 100 % hydrolysierte Polyvinylformamide, partiell oder vollständig hydrolysierte Copolymerisate aus Vinylformamid und Vinylacetat, Vinylalkohol, Vinylpyrrolidon oder Acrylamid jeweils mit Molmassen von 3.000 - 2.000 000 sowie Polyethylenimine, vernetzte Polyethylenimine oder amidierte Polyethylenimine, die jeweils Molmassen von 500 bis 3.000.000 haben. Der Polymergehalt der wäßrigen Lösung beträgt beispielsweise 1 bis 60, vorzugsweise 2 bis 15 und meistens 5 bis 10 Gew.-%.

(b) Vernetzer

Um aus den oben beschriebenen basischen Polymeren wasserabsorbierende basische Polymere zu erhalten, setzt man sie mit mindestens einem Vernetzer um. Die basischen Polymeren sind meistens wasserlöslich bzw. leicht in Wasser dispergierbar. Die Vernetzung erfolgt daher hauptsächlich in wäßrigem Medium. Bevorzugt werden wäßrige Lösungen von basischen Polymeren eingesetzt, die beispielsweise mit Hilfe einer Ultrafiltration entsalzt sind bzw. deren Gehalt an Neutralsalzen unter 1 bzw. unter 0,5 Gew.-% liegt. Die Vernetzer haben mindestens zwei reaktive Gruppen, die mit den Aminogruppen der basischen Polymeren reagieren und dabei unlösliche Produkte bilden, die wasserabsorbierende Polymere darstellen. Pro 1 Gewichtsteil eines basischen Polymeren setzt man beispielsweise 0,1 bis 50, vorzugsweise 1 bis 5 Gew.-Teile und insbesondere 1,5 bis 3 Gew.-Teile eines Vernetzers ein. Geeignete Vernetzer werden in der WO-A-00/63295, Seite 14, Zeile 43 bis Seite 21, Zeile 5 beschrieben.

Geeignete bi- oder polyfunktionelle Vernetzer sind beispielsweise

(1) Di- und Polyglycidylverbindungen
(2) Di- und Polyhalogenverbindungen
(3) Verbindungen mit zwei oder mehr Isocyanatgruppen, die blokkiert sein können
(4) Polyaziridine
(5) Kohlensäurederivate
(6) Verbindungen mit zwei oder mehreren aktivierten Doppelbindungen, die eine Michael-Addition eingehen können
(7) Di- und Polycarbonsäuren sowie deren Säurederivate
(8) monoethylenisch ungesättigte Carbonsäuren, deren Ester, Amide und Anhydride
(9) Di- und Polyaldehyde und Di- und Polyketone.

Bevorzugte Vernetzer (1) sind beispielsweise die in der US-A-4 144 123 beschriebenen Bischlorhydrinethern von Polyalkylenglykolen. Weiterhin seien Phosphorsäurediglycidylether und Ethylenglykoldiglycidylether genannt.

Weitere Vernetzer sind die Umsetzungsprodukte von mindestens dreiwertigen Alkoholen mit Epichlorhydrin zu Reaktionsprodukten, die mindestens zwei Chlorhydrin-Einheiten aufweisen, z.B. verwendet man als mehrwertige Alkohole Glycerin, ethoxylierte oder propoxylierte Glycerine, Polyglycerine mit 2 bis 15 Glycerin-Einheiten im Molekül sowie gegebenenfalls ethoxylierte und/oder propoxylierte Polyglycerine. Vernetzer dieser Art sind beispielsweise aus der DE-A-2 916 356 bekannt.

Geeignete Vernetzer (2) sind $\alpha,\omega$- oder vicinale Dichloralkane, beipielsweise 1,2 Dichlorethan, 1,2 Dichlorpropan, 1,3-Dichlorbutan und 1,6-Dichlorhexan.

Ferner sind aus der EP-A-0 025 515 $\alpha,\omega$-Dichlorpolyalkylenglykole die vorzugsweise 1 - 100, insbesondere 1 - 100 Ethylenoxideinheiten haben, als Vernetzer bekannt.

Außerdem eignen sich Vernetzer (3), die blockierte IsocyanatGruppen enthalten, z.B. Trimethylhexamethylendiisocyanat blokkiert mit 2,2,6,6-Tetramethylpiperidin-4-on. Solche Vernetzer sind bekannt, vgl. beispielsweise aus DE-A-4 028 285.

Bevorzugt sind ferner Aziridin-Einheiten enthaltende Vernetzer (4) auf Basis von Polyethern oder substituierten Kohlenwasserstoffen, z.B. 1,6-Bis-N-aziridinomethan, vgl. US-A-3 977 923. In diese Vernetzerklasse fallen weiterhin mindestens zwei Aziridinogruppen enthaltende Umsetzungsprodukte von Dicarbonsäureestern mit Ethylenimin sowie Mischungen der genannten Vernetzer.

Als halogenfreie Vernetzer der Gruppe (4) kommen Reaktionsprodukte in Betracht, die durch Umsetzung von Dicarbonsäureestern, die mit einwertigen Alkoholen mit 1 bis 5 Kohlenstoffatomen vollständig verestert sind, mit Ethylenimin hergestellt werden. Geeignete Dicarbonsäureester sind beispielsweise Oxalsäuredimethylester, Oxalsäurediethylester, Bernsteinsäuredimethylester, Bernsteinsäurediethylester, Adipinsäuredimethylester, Adipinsäurediethylester und Glutarsäuredimethylester. So erhält man beispielsweise bei der Umsetzung von Diethyloxalat mit Ethylenimin Bis-[$\beta$-(1-Aziridino)ethyl]oxalsäureamid. Die Dicarbonsäureester werden mit Ethylenimin beispielsweise im Molverhältnis

von 1 zu mindestens 4 umgesetzt. Reaktive Gruppen dieser Vernetzer sind die endständigen Aziridingruppen. Diese Vernetzer können beispielsweise mit Hilfe der Formel charakterisiert werden:

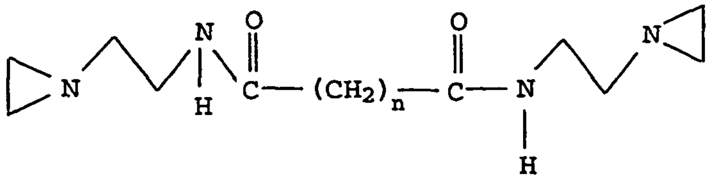

worin n = 0 bis 22 bedeutet.

Als Vernetzer (5) seien Ethylencarbonat, Propylencarbonat, Harnstoff, Thioharnstoff, Guanidin, Dicyandiamid oder 2-Oxazolidinon und dessen Derivate beispielhaft genannt. Aus dieser Gruppe von Monomeren wird vorzugsweise Propylencarbonat, Harnstoff und Guanidin verwendet.

Vernetzer (6) sind Umsetzungsprodukte von Polyetherdiaminen, Alkylendiaminen, Polyalkylenpolyaminen, Alkylenglykolen, Polyalkylenglykolen oder deren Gemischen mit monoethylenisch ungesättigten Carbonsäuren, Estern, Amiden oder Anhydriden monoethylenisch ungesättigter Carbonsäuren, wobei die Umsetzungsprodukte mindestens zwei ethylenisch ungesättigte Doppelbindungen, Carbonsäureamid-, Carboxyl- oder Estergruppen als funktionelle Gruppen aufweisen, sowie Methylenbisacrylamid und Divinylsulfon.

Vernetzer (6) sind beispielsweise Umsetzungsprodukte von Polyetherdiaminen mit bevorzugt 2 bis 50 Alkylenoxideinheiten, Alkylendiaminen wie Ethylendiamin, Propylendiamin, 1,4-Diaminobutan und 1,6-Diaminohexan, Polyalkylenpolyaminen mit Molekulargewichten < 5000 z.B. Diethylentriamin, Triethylentetramin, Dipropylentriamin, Tripropylentetramin, Dihexamethylentriamin und Aminopropylethylendiamin, Alkylenglykolen, Polyalkylenglykolen oder deren Gemischen mit

- monoethylenisch ungesättigten Carbonsäuren,
- Estern monoethylenisch ungesättigter Carbonsäuren,
- Amiden monoethylenisch ungesättigter Carbonsäuren und
- Anhydriden monoethylenisch ungesättigter Carbonsäuren.

Diese Umsetzungsprodukte sowie ihre Herstellung werden in der EP-A-873 371 beschrieben und seien als Vernetzer ausdrücklich erwähnt.

Besonders bevorzugt in Betracht kommende Vernetzer sind die hierin erwähnten Umsetzungsprodukte von Maleinsäureanhydrid mit $\alpha,\omega$-Polyetherdiaminen einer Molmasse von 400 bis 5000, die Umsetzungsprodukte von Polyethyleniminen einer Molmasse von 129 bis 50000 mit Maleinsäureanhydrid sowie die Umsetzungsprodukte von Ethylendiamin oder Triethylentetramin mit Maleinsäureanhydrid im Molverhältnis von 1: mindestens 2.

Als Vernetzer (6) verwendet man vorzugsweise die Verbindungen der Formel

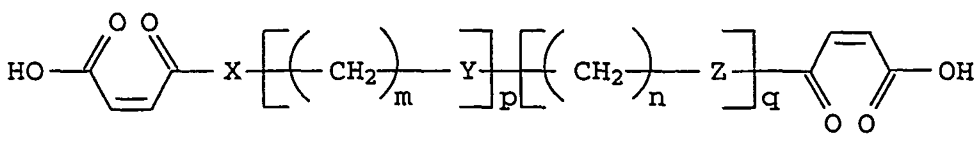

in der X, Y, Z = O, NH
und Y zusätzlich noch $CH_2$
m, n = 0 - 4
p, q = 0 - 45000
bedeuten,
die durch Umsetzung von Polyetherdiaminen, Ethylendiamin oder Polyalkylenpolyaminen mit Maleinsäureanhydrid erhältlich sind.

Weitere halogenfreie Vernetzer der Gruppe (7) sind mindestens zweibasische gesättigte Carbonsäuren wie

Dicarbonsäuren sowie die davon abgeleiteten Salze, Diester und Diamide. Diese Verbindungen können beispielsweise mit Hilfe der Formel

$$X\text{-}CO\text{-}(CH_2)_n\text{-}CO\text{-}X$$

in der

$X= OH, OR^1, N(R^2)_2$

$R^1= C_1$- bis $C_{22}$-Alkyl,

$R^2= H, C_1\text{-}C_{22}$-Alkyl

und
n= 0 bis 22
charakterisiert werden. Außer den Dicarbonsäuren der obengenannten Formel eignen sich beispielsweise monoethylenisch ungesättigte Dicarbonsäuren wie Maleinsäure oder Itaconsäure. Die Ester der in Betracht kommenden Dicarbonsäuren leiten sich vorzugsweise von Alkoholen mit 1 bis 4 Kohlenstoffatomen ab. Geeignete Dicarbonsäureester sind beispielsweise Oxalsäuredimethylester, Oxalsäurediethylester, Oxalsäurediisopropylester, Bernsteinsäuredimethylester, Bernsteinsäuredieethylester, Bernsteinsäurediisopropylester, Bernsteinsäuredi-n-propylester, Bernsteinsäurediisobutylester, Adipinsäuredimethylester, Adipinsäurediethylester und Adipinsäurediisopropylester oder mindestens 2 Estergruppen enthaltende Michael-Additionsprodukte aus Polyetherdiaminen, Polyalkylenpolyaminen oder Ethylendiamin und Estern der Acrylsäure oder Methacrylsäure mit jeweils einwertigen 1 bis 4 C-Atome enthaltenden Alkoholen. Geeignete Ester von ethylenisch ungesättigten Dicarbonsäuren sind beispielsweise Maleinsäuredimethylester, Maleinsäurediethylester, Maleinsäurediisopropylester, Itaconsäuredimethylester und Itaconsäurediisopropylester. Außerdem kommen substituierte Dicarbonsäuren und ihre Ester wie Weinsäure (D,L-Form und als Racemat) sowie Weinsäureester wie Weinsäuredimethylester und Weinsäurediethylester in Betracht.

Geeignete Dicarbonsäureanhydride sind beispielsweise Maleinsäureanhydrid, Itaconsäureanhydrid und Bernsteinsäureanhydrid. Weiterhin sind als Vernetzer (7) Maleinsäuredimethylester, Maleinsäurediethylester und Maleinsäure beispielsweise geeignet. Die Vernetzung von Aminogruppen enthaltenden Verbindungen mit den vorstehend genannten Vernetzern erfolgt unter Bildung von Amidgruppen bzw. bei Amiden wie Adipinsäurediamid durch Umamidierung. Maleinsäureester, monoethylenisch ungesättigte Dicarbonsäuren sowie deren Anhydride können sowohl durch Bildung von Carbonsäureamidgruppen als auch durch Addition von NH-Gruppen der zu vernetzenden Komponente (z.B. Polyamidoaminen) nach Art einer Michael-Addition eine Vernetzung bewirken.

Zu den mindestens zweibasischen gesättigten Carbonsäuren der Vernetzerklasse (7) gehören beispielsweise Tri- und Tetracarbonsäuren wie Citronensäure, Propantricarbonsäure, Nitrilotriessigsäure, Ethylendiamintetraessigsäure, Butantetracarbonsäure und Diethylentriaminpentaessigsäure. Als Vernetzer der Gruppe (7) kommen außerdem die von vorstehend genannten Carbonsäuren abgeleiteten Salze, Ester, Amide und Anhydride z.B. Weinsäuredimethylester, Weinsäurediethylester, Adipinsäuredimethylester, Adipinsäurediethylester in Betracht.

Geeignete Vernetzer der Gruppe (7) sind außerdem Polycarbonsäuren, die durch Polymerisieren von monoethylenisch ungesättigten Carbonsäuren, Anhydriden, Estern oder Amiden erhältlich sind. Als monethylenisch ungesättigte Carbonsäuren kommen z.B. Acrylsäure, Methacrylsäure, Fumarsäure, Maleinsäure und/oder Itaconsäure in Betracht. So eignen sich als Vernetzer z.B. Polyacrylsäuren, Copolymerisate aus Acrylsäure und Methacrylsäure oder Copolymerisate aus Acrylsäure und Maleinsäure. Als Comonomere seine Vinylether, Vinylformiat, Vinylacetat und Vinyllactam beispielhaft genannt.

Weitere geeignete Vernetzer (7) werden z.B. durch radikalische Polymerisation von Anhydriden wie Maleinsäureanhydrid in einem inerten Lösemittel wie Toluol, Xylol, Ethylbenzol, Isopropylbenzol oder Lösemittelgemischen hergestellt. Außer den Homopolymerisaten kommen Copolymerisate von Maleinsäureanhydrid in Betracht, z.B. Copolymerisate aus Acrylsäure und Maleinsäureanhydrid oder Copolymerisate aus Maleinsäureanhydrid und einem $C_2$- bis $C_{30}$-Olefin.

Bevorzugte Vernetzer (7) sind beispielsweise Copolymerisate aus Maleinsäureanhydrid und Isobuten oder Copolymerisate aus Maleinsäureanhydrid und Diisobuten. Die Anhydridgruppen enthaltenden Copolymerisate können gegebenenfalls durch Umsetzung mit $C_1$- bis $C_{20}$-Alkoholen oder Ammoniak oder Aminen modifiziert sein und in dieser Form als Vernetzer eingesetzt werden.

Bevorzugte polymere Vernetzer (7) sind beispielsweise Copolymere aus Acrylamid und Acrylestern, wie beipielsweise Hydroxiethylacrylat oder Methylacrylat wobei das Mol-Verhältnis von Acrylamid und Acrylester von 90:10 bis zu 10:90 variieren kann. Neben diesen Copolymeren sind auch Terpolymere einsetzbar, wobei beispielsweise Kombinationen aus Acrylamid, Methacrylamid, Acrylestern bzw. Methacrylestern zur Verwendung kommen können.

Die Molmasse $M_w$ der Homo- und Copolymere beträgt z.B. bis zu 10000, vorzugsweise 500 bis 5000. Polymerisate der oben genannten Art werden z.B. beschrieben in EP-A-0 276 464, US-A-3 810 834, GB-A-1 411 063 und US-A-4 818 795. Die mindestens zweibasischen gesättigten Carbonsäuren und die Polycarbonsäuren können auch in Form der Alkali- oder Ammoniumsalze als Vernetzer eingesetzt werden. Bevorzugt verwendet man dabei die Natriumsalze. Die Polycarbonsäuren können partiell, z.B. zu 10 bis 50 mol-% oder auch vollständig neutralisiert sein.

Geeignete halogenfreie Vernetzer der Gruppe (8) sind z.B. monoethylenisch ungesättigte Monocarbonsäuren wie Acrylsäure, Methacrylsäure und Crotonsäure sowie die davon abgeleiteten Amide, Ester und Anhydride. Die Ester können sich von Alkoholen mit 1 - 22, vorzugsweise 1 bis 18 C-Atomen ableiten. Die Amide sind vorzugsweise unsubstituiert, können jedoch einen $C_1$-$C_{22}$-Alkylrest als Substituent tragen.

Bevorzugt eingesetzte Vernetzer (8) sind Acrylsäure, Acrylsäuremethylester, Acrylsäureethylester, Acrylamid und Methacrylamid.

Geeignete halogenfreie Vernetzer der Gruppe (9) sind z.B. Dialdehyde oder deren Halb- oder Acetale als Vorstufen, wie beispielsweise Glyoxal, Methylglyoxal, Malondialdehyd, Succindialdehyd, Malein- und Fumarsäuredialdehyd, Weinsäuredialdehyd, Adipindialdehyd, 2-Oxi-adipindialdehyd, Furan-2,5-dipropionaldehyd, 2-Formyl-2,3-dihydropyran, Glutardialdehyd, Pimelinsäurealdehyd sowie aromatische Dialdehyde wie beispielsweise Terephthaldialdehyd, o-Phthaldialdehyd, Pyridin-2,6-dialdehyd oder Phenylglyoxal. Es können aber auch Homo- oder Copolymere des Acroleins des Methacroleins mit Molmassen von 114 bis ca. 10000 verwendet werden. Als Comonomere können prinzipiell alle wasserlöslichen zum Einsatz kommen wie beispielsweise Acrylamid, Vinylacetat und Acrylsäure. Ebenso als Vernetzer geeignet sind Aldehydstärken.

Geeignete halogenfreie Vernetzer der Gruppe (9) sind z.B. Diketone oder die entsprechenden Halb- oder Ketale als Vorstufen wie beispielsweise β-Diketone wie Acetylaceton oder Cycloalkan-1,n-dione wie beispielsweise Cyclopentan-1,3-dion und Cyclohexan-1,4-dion. Es können aber auch Homo- oder Copolymere des Methylvinylketons mit Molmassen von 140 bis ca. 15000 verwendet werden. Als Comonomere können prinzipiell alle wasserlöslichen Monomere zum Einsatz kommen wie beispielsweise Acrylamid, Vinylacetat und Acrylsäure.

Es ist selbstverständlich auch möglich Mischungen aus zwei oder mehreren Vernetzern zu verwenden.

Bevorzugt eingesetzte Vernetzer sind Glycidylether von Alkylenglykolen wie Ethylenglycol, Propylenglykol, Butandiol-1,4, Hexandiol-1,6 und Polyalkylenglykolen mit Molmassen bis 1500 sowie die vollständig mit Acrylsäure und/oder Methacrylsäure veresterten Anlagerungsprodukte von 1 bis 25 Mol, vorzugsweise 2 bis 15 Mol Ethylenoxid and 1 Mol Trimethylolpropan oder Pentaerythrit.

(c) Tenside

Die vernetzbaren wäßrigen Mischungen enthalten als weitere Komponente 0,1 bis 20 Gew.-% mindestens eines Tensids. Die Tenside sind für die Herstellung und die Stabilisierung des Schaums von entscheidender Bedeutung. Man kann anionische, kationische oder nichtionische Tenside oder Tensidmischungen verwenden, die miteinander verträglich sind. Man kann niedermolekulare oder auch polymere Tenside einsetzen, wobei sich Kombinationen unterschiedlicher oder auch gleichartiger Typen von Tensiden als vorteilhaft herausgestellt haben. Nichtionische Tenside sind beispielsweise Additionsprodukte von Alkylenoxiden, insbesondere Ethylenoxid, Propylenoxid und/oder Butylenoxid an Alkohole, Amine, Phenole, Naphthole oder Carbonsäuren. Vorteilhaft setzt man als Tenside Additionsprodukte von Ethylenoxid und/oder Propylenoxid an mindestens 10 C-Atome enthaltende Alkohole ein, wobei die Additionsprodukte pro Mol Alkohol 3 bis 200 Mol Ethylenoxid und/oder Propylenoxid angelagert enthalten. Die Additionsprodukte enthalten die Alkylenoxid-Einheiten in Form von Blöcken oder in statistischer Verteilung. Beispiele für nichtionische Tenside sind die Additionsprodukte von 7 Mol Ethylenoxid an 1 Mol Talgfettalkohol, Umsetzungsprodukte von 9 Mol Ethylenoxid mit 1 Mol Talgfettalkohol und Additionsprodukte von 80 Mol Ethylenoxid an 1 Mol Talgfettalkohol. Weitere handelsübliche nichtionische Tenside bestehen aus Umsetzungsprodukten von Oxoalkoholen oder Ziegler-Alkoholen mit 5 bis 12 Mol Ethylenoxid pro Mol Alkohol, insbesondere mit 7 Mol Ethylenoxid. Weitere handelsübliche nichtionische Tenside werden durch Ethoxylierung von Rizinusöl erhalten. Pro Mol Rizinusöl werden beispielsweise 12 bis 80 Mol Ethylenoxid angelagert. Weitere handelsübliche Produkte sind beispielsweise die Umsetzungsprodukte von 18 Mol Ethylenoxid mit 1 Mol Talgfettalkohol, die Additionsprodukte von 10 Mol Ethylenoxid an 1 Mol eines $C_{13}/C_{15}$-Oxoalkohols, oder die Umsetzungsprodukte von 7 bis 8 Mol Ethylenoxid an 1 Mol eines $C_{13}/C_{15}$-Oxoalkohols. Weitere geeignete nichtionische Tenside sind Phenolalkoxylate wie beispielsweise p-tert.-Butylphenol, das mit 9 Mol Ethylenoxid umgesetzt ist, oder Methylether von Umsetzungsprodukten aus 1 Mol eines $C_{12}$- bis $C_{18}$-Alkohols und 7,5 Mol Ethylenoxid.

Die oben beschriebenen nichtionischen Tenside können beispielsweise durch Veresterung mit Schwefelsäure in die entsprechenden Schwefelsäurehalbester überführt werden. Die Schwefelsäurehalbester werden in Form der Alkalimetall- oder Ammoniumsalze als anionische Tenside eingesetzt. Als anionische Tenside eignen sich beispielsweise Alkalimetall- oder Ammoniumsalze von Schwefelsäurehalbestern von Additionsprodukten von Ethylenoxid und/oder Propylenoxid an Fettalkohole, Alkalimetall- oder Ammoniumsalze von Alkylbenzolsulfonsäure oder von Alkylphenolethersulfaten. Produkte der genannten Art sind im Handel erhältlich. Beispielsweise sind das Natriumsalz eines Schwefelsäurehalbesters eines mit 106 Mol Ethylenoxid umgesetzten $C_{13}/C_{15}$-Oxoalkohols, das Triethanolaminsalz von Dodecylbenzolsulfonsäure, das Natriumsalz von Alkylphenolethersulfaten und das Natriumsalz des Schwefelsäurehalbesters eines Umsetzungsprodukts von 106 Mol Ethylenoxid mit 1 Mol Talgfettalkohol handelsübliche anionische Tenside. Weitere geeignete anionische Tenside sind Schwefelsäurehalbester von $C_{13}/C_{15}$-Oxoalkoholen, Paraffinsulfonsäuren wie $C_{15}$-Alkylsulfonat, alkylsubstituierte Benzolsulfonsäuren und alkylsubstituierte Naphthalinsulfonsäuren wie Dodecylbenzolsulfonsäure und Di-n-butylnaphthalinsulfonsäure sowie Fettalkoholphosphate wie $C_{15/}C_{18}$-Fettalkoholphosphat. Die polymerisierbare wäßrige Mischung kann Kombinationen aus einem nichtionischen Tensid und einem anionischen Tensid oder Kombinationen aus nichtionischen Tensiden oder Kombinationen aus anionischen Tensiden enthalten. Auch kationische Tenside sind geeignet. Beispiele hierfür sind die mit Dimethylsulfat quaternierten Umsetzungsprodukte von 6,5 Mol Ethylenoxid mit 1 Mol Oleylamin, Distearyldimethylammoniumchlorid, Lauryltrimethylammoniumchlorid, Cetylpyridiniumbromid und mit Dimethylsulfat quaternierter Stearinsäuretriethanolaminester, der bevorzugt als kationisches Tensid eingesetzt wird.

Der Tensidgehalt der wäßrigen Mischung beträgt vorzugsweise 0,5 bis 10 Gew.-%. In den meisten Fällen weisen die wäßrigen Mischungen einen Tensidgehalt von 1,5 bis 8 Gew.-% auf.

(d) Lösevermittler

Die vernetzbaren wäßrigen Mischungen können gegebenenfalls als weitere Komponente mindestens einen Lösevermittler enthalten. Hierunter sollen mit Wasser mischbare organische Lösemittel verstanden werden, z.B. Dimethylsulfoxid, Dimethylformamid, N-Methylpyrrolidon, einwertige Alkohole, Glykole, Polyethylenglykole bzw. davon abgeleitete Monoether, wobei die Monoether keine Doppelbindungen im Molekül enthalten. Geeignete Ether sind Methylglykol, Butylglykol, Butyldiglykol, Methyldiglykol, Butyltriglykol, 3-Ethoxy-1-propanol und Glycerinmonomethylether.

Die wäßrigen Mischungen enthalten 0 bis 50 Gew.-% mindestens eines Lösevermittlers. Falls Lösevermittler eingesetzt werden, beträgt ihr Gehalt in der wäßrigen Mischung vorzugsweise 1 bis 25 Gew.-%.

(e) Verdicker, Schaumstabilisatoren, Füllstoffe, Fasern, Zellkeimbildner

Die vernetzbare wäßrige Mischung kann gegebenenfalls Verdicker, Schaumstabilisatoren, Füllstoffe, Fasern und/oder Zellkeimbildner enthalten. Verdicker werden beispielsweise zur Optimierung der Schaumstruktur und zur Verbesserung der Schaumstabilität eingesetzt. Man erreicht damit, daß der Schaum während der Polymerisation nur geringfügig schrumpft. Als Verdickungsmittel kommen alle hierfür bekannten natürlichen und synthetischen Polymeren in Betracht, die die Viskosität eines wäßrigen Systems stark erhöhen und nicht mit den Aminogruppen der basischen Polymeren reagieren. Hierbei kann es sich um wasserquellbare oder wasserlösliche synthetische und natürliche Polymere handeln. Eine ausführliche Übersicht über Verdicker findet man beispielsweise in den Veröffentlichungen von R.Y. Lochhead und W.R. Fron, Cosmetics & Toiletries, 108, 95-135 (Mai 1993) und M.T. Clarke, "Rheological Additives" in D. Laba (ed.) "Rheological Properties of Cosmetics and Toiletries", Cosmetic Science and Technology Series, Vol. 13, Marcel Dekker Inc., New York 1993.

Als Verdicker in Betracht kommende wasserquellbare oder wasserlösliche synthetische Polymere sind beispielsweise hochmolekulare Polyethylenglykole oder Copolymerisate aus Ethylenglykol und Propylenglykol sowie hochmolekulare Polysaccharide wie Stärke, Guarkernmehl, Johannisbrotkernmehl oder Derivate von Naturstoffen wie Carboxymethylcellulose Hydroxyethylcellulose, Hydroxymethylcellulose, Hydroxypropylcellulose und Cellulose Mischether. Eine weitere Gruppe von Verdickern sind wasserunlösliche Produkte, wie feinteiliges Siliciumdioxid, Zeolithe, Bentonit, Cellulosepulver, oder andere feinteilige Pulver von vernetzten Polymerisaten. Die wäßrigen Mischungen können die Verdicker in Mengen bis zu 30 Gew.-% enthalten. Falls solche Verdickungsmittel überhaupt eingesetzt werden, sind sie in Mengen von 0,1, vorzugsweise 0,5 bis 20 Gew.-% in der wäßrigen Mischung enthalten.

Um die Schaumstruktur zu optimieren, kann man gegebenenfalls Kohlenwasserstoffe mit mindestens 5 C-Atomen im Molekül zu der wäßrigen Reaktionsmischung zusetzen. Geeignete Kohlenwasserstoffe sind beispielsweise Pentan, Cyclopentan, Hexan, Cyclohexan, Heptan, Octan, Isooctan, Decan und Dodecan. Die in Betracht kommenden aliphatischen Kohlenwasserstoffe können geradkettig, verzweigt oder zyklisch sein und haben eine Siedetemperatur, die oberhalb der Temperatur der wäßrigen Mischung während des Schäumens liegt. Die aliphatischen Kohlenwasserstoffe erhöhen die Standzeit der noch nicht polymerisierten geschäumten wäßrigen Reaktionsmischung. Dadurch wird das Handling der noch nicht polymerisierten Schäume erleichtert und die Prozeßsicherheit erhöht. Die Kohlenwasserstoffe wirken beispielsweise als Zellkeimbildner und stabilisieren gleichzeitig den bereits gebildeten Schaum. Darüber hinaus können sie beim Polymerisieren des Monomerschaums ein weiteres Schäumen der Mischung bewirken. Sie können dann auch die Funktion eines Treibmittels haben. Anstelle von Kohlenwasserstoffen oder in Mischung damit kann man auch gegebenenfalls chlorierte oder fluorierte Kohlenwasserstoffe als Zellkeimbildner und/oder Schaumstabilisator einsetzen, z.B. Dichlormethan, Trichlormethan, 1,2-Dichlorethan, Trichlorfluormethan oder 1,1,2-Trichlortrifluorethan. Falls Kohlenwasserstoffe eingesetzt werden, verwendet man sie beispielsweise in Mengen von 0,1 bis 20 Gew.-

%, vorzugsweise 0,1 bis 10 Gew.-%, bezogen auf die polymerisierbare wäßrige Mischung.

Um die Eigenschaften der Schaumstoffe zu modifizieren, kann man der vernetzbaren wäßrigen Mischung einen oder mehrere Füllstoffe zusetzen, z.B. Kreide, Talkum, Clay, Titandioxid, Magnesiumoxid, Aluminiumoxid, Fällungskieselsäuren in hydrophilen oder hydrophoben Modifikationen, Dolomit und/oder Calciumsulfat. Die Teilchengröße der Füllstoffe beträgt beispielsweise 10 bis 1000 μm, vorzugsweise 50 bis 850 μm. Die Füllstoffe können in Mengen bis zu 30 Gew.-% in der vernetzbaren wäßrigen Mischung enthalten sein.

Die Eigenschaften der Schaustoffe können gegebenenfalls auch mit Hilfe von Fasern modifiziert werden. Hierbei kann es sich um natürliche oder synthetische Fasern bzw. um Fasergemische handeln, z.B. Fasern aus Cellulose, Wolle, Polyethylen, Polypropylen, Polyestern oder Polyamiden. Falls Fasern eingesetzt werden, können sie beispielsweise in einer Menge bis zu 200 Gew.-%, vorzugsweise bis zu 25 Gew.-% in der wäßrigen Mischung vorhanden sein. Füllstoffe und Fasern können gegebenenfalls auch der bereits geschäumten Mischung zugesetzt werden. Die Mitverwendung von Fasern führt zu einer Erhöhung der Festigkeitseigenschaften wie Naßfestigkeit, des fertigen Schaumstoffs.

(f) Wasserabsorbierende saure Polymere

Als wasserabsorbierende saure Polymere, die nachfolgend auch als saure Superabsorber bezeichnet werden, können sämtliche Hydrogele eingesetzt werden, die z.B. in der WO-A-00/63295, Seite 2, Zeile 27 bis Seite 9, Zeile 16 beschrieben sind. Hierbei handelt es sich im Wesentlichen um schwach vernetzte Polymere von sauren Monomeren, die in zumindest partiell neutralisierter Form ein hohes Wasseraufnahmevermögen besitzen. Beispiele für solche jeweils geringfügig vernetzten Polymerisate sind vernetzte Polyacrylsäuren, vernetzte, hydrolysierte Pfropfpolymere von Acrylnitril auf Stärke, vernetzte Pfropfpolymerisate von Acrylsäure auf Stärke, hydrolysierte, vernetzte Copolymere aus Vinylacetat und Acrylsäureestern, vernetzte Polyacrylämide, hydrolysierte, vernetzte Polyacrylamide, vernetzte Copolymerisate aus Ethylen und Maleinsäureanhydrid, vernetzte Copolymerisate aus Isobutylen und Maleinsäureandhydrid, vernetzte Polyvinylsulfonsäuren, vernetzte Polyvinylphosphonsäuren und vernetztes sulfoniertes Poylstyrol. Die genannten sauren Superabsorber können entweder allein oder in Mischung miteinander der vernetzbaren wäßrigen Mischung zugesetzt werden. Vorzugsweise verwendet man als saure Superabsorber teilchenförmige Polymerisate von neutralisierten, geringfügig vernetzten Polyacrylsäuren. Die Neutralisation der Säuregruppen der sauren Superabsorber erfolgt vorzugsweise mit Natronlauge, Natriumhydrogencarbonat oder Natriumcarbonat. Die Neutralisation kann jedoch auch mit Kalilauge, Ammoniak, Aminen oder Alkanolaminen wie Ethanolamin, Diethanolamin oder Triethanolamin vorgenommen werden.

Die wasserabsorbierenden sauren Polymeren werden in partikulärer Form zu der vernetzbaren Mischung oder vorzugsweise zu der bereits geschäumten vernetzbaren Mischung gegeben. Die Teilchen können in fester Form oder in geschäumter Form verwendet werden. Der mittlere Teilchendurchmesser nach dem Gewichtsmittel beträgt beispielsweise 10 bis 2000 μm, vorzugsweise 100 bis 850 μm und liegt meistens in dem Bereich von 150 bis 450 μm. Superabsorber mit den entsprechenden Teilchengrößen können beispielsweise durch Zerkleinern, z.B. durch Mahlen von grobkörnigen, festen Superabsorbern oder von geschäumten Superabsorbern hergestellt werden. Die Dichte der geschäumten, sauren Superabsorber beträgt beispielsweise 0,01 bis 0,9 $g/cm^3$, vorzugsweise 0,05 bis 0,7 $g/cm^3$. Die Oberfläche der partikulären Superabsorber kann gegebenenfals nachvernetzt sein. Vorzugsweise setzt man saure Superabsorber ein, deren Oberfläche nicht nachvernetzt ist.

Saure Superabsorber sind aus den obengenannten Literaturstellen bekannt, vgl. insbesondere WO-A-00/63295, Seite 6, Zeile 36 bis Seite 7, Zeile 44. Zur Oberflächennachvernetzung werden beispielsweise Teilchen aus geringfügig vernetzten Polyacrylsäuren mit Verbindungen umgesetzt, die mindestens zwei gegenüber Carboxylgruppen reaktive Gruppen aufweisen. Hierbei handelt es sich um typische Vernetzer, die oben unter (b) angegeben sind. Von besonderem Interesse für die Anwendung als Vernetzer sind beispielsweise mehrwertige Alkohole wie Propylenglykol, Butandiol-1,4 oder Hexandiol-1,6 und Glycidylether von Ethylenglykol und Polyethylenglykolen mit Molmassen von 200 bis 1500, vorzugsweise 300 bis 400, und vollständig mit Acrylsäure oder Methacrylsäure veresterte Umsetzungsprodukte von Trimethylolpropan, von Umsetzungsprodukten aus Trimethylolpropan und Ethylenoxid im Molverhältnis 1 : 1 bis 25, vorzugsweise 1 : 3 bis 15 sowie von Umsetzungsprodukten von Pentaerythrit mit Ethylenoxid im Molverhältnis 1 : 30, vorzugsweise 1 : 4 bis 20. Die Nachvernetzung der Oberfläche der anionischen Superabsorberteilchen wird beispielsweise bei Temperaturen bis zu 220°C, z.B. vorzugsweise bei 120 bis 190°C durchgeführt.

Als wasserabsorbierende saure Polymere setzt man Superabsorber in Form von Teilchen mit den oben angegebenen Teilchengrößen ein. Sofern man in die vernetzbare wäßrige Mischung wasserabsorbierende saure Polymere einarbeitet, so enthält die Polymermischung z.B. 10 bis 90, vorzugsweise 30 bis 70 Gew.-% eines wasserabsorbierenden sauren Polymers. Meistens enthält die Mischung aus geschäumtem basischen Hydrogel und dem gegebenenfalls geschäumten sauren Hydrogel 40 bis 60 Gew.-% des sauren Superabsorbers.

Um Schäume herzustellen, die auch gegenüber salzhaltigen wäßrigen Lösungen ein hohes Absorptionsvermögen aufweisen, setzt man die basischen und die sauren Superabsorber vorzugsweise in nichtneutralisierter Form ein. Der Neutralisationsgrad der sauren wasserabsorbierenden Polymeren beträgt beispielsweise 0 bis 100, vorzugsweise 0 bis 75 und meistens 0 bis 50 Mol-%. Die wasserabsorbierenden basischen Polymeren haben in Form der freien Basen eine höhere Aufnahmekapazität für salzhaltige wäßrige Lösungen und insbesondere saure wäßrige Lösungen als in der mit Säuren neutralisierten Form. Wenn basische Polymere als alleinige wasserabsorbierende Polymere eingesetzt werden, so beträgt der Neutralisationsgrad beispielsweise 0 bis 100. Vorzugsweise 0 bis 60 Mol.-%.

Herstellung des Schaumstoffs

Die oben beschriebene vernetzbare wäßrige Mischung, die die Komponenten (a) basisches Polymer, (b) Vernetzer und (c) Tensid zwingend sowie gegebenenfalls mindestens eine der Komponenten (d), (e) und/oder (f) enthält, wird zunächst geschäumt. Man kann beispielsweise ein inertes Gas unter einem Druck von z.B. 2 bis 400 bar in der vernetzbaren wäßrigen Mischung lösen und sie anschließend auf Atmosphärendruck entspannen. Beim Entspannen aus einer Düse entsteht ein fließfähiger Schaum. Man kann die vernetzbare wäßrige Mischung auch nach einer anderen Methode schäumen, indem man darin feine Blasen eines inerten Gases dispergiert. Das Schäumen der vernetzbaren wäßrigen Mischung kann im Labor beispielsweise dadurch erfolgen, daß man die wäßrige Mischung in einer Küchenmaschine, die mit einem Schneebesen ausgerüstet ist, schäumt. Die Schaumerzeugung wird vorzugsweise in einer Inertgasatmosphäre durchgeführt, z.B. in Stickstoff oder Edelgasen unter Normaldruck oder erhöhtem Druck, z.B. bis zu 25 bar und anschließendes Entspannen durchgeführt. Die Konsistenz der Schäume, die Größe der Gasblasen und die Verteilung der Gasblasen im Schaum kann beispielsweise durch die Auswahl der Tenside, Lösevermittler, Schaumstabilisatoren, Zellkeimbildner, Verdickungsmittel und Füllstoffe in einem weiten Bereich variiert werden. Dadurch kann man die Dichte, den Grad der Offenzelligkeit des Schaumstoffs und Wandstärke des Schaumstoffs leicht einstellen. Die wäßrige Mischung wird vorzugsweise bei Temperaturen geschäumt, die unterhalb des Siedepunkts der Bestandteile der wäßrigen Mischung liegen, z.B. bei Raumtemperatur bis zu 100°C, vorzugsweise bei 20 bis 50°C. Man kann jedoch auch bei Temperaturen oberhalb des Siedepunkts der Komponente mit dem niedrigsten Siedepunkt arbeiten, indem man die Mischung in einem druckdicht verschlossenen Behälter schäumt. Man erhält vernetzbare, schaumförmige Mischungen, die fließfähig und über einen längeren Zeitraum stabil sind. Die Dichte der geschäumten, vernetzbaren Mischung beträgt bei einer Temperatur von 20°C beispielsweise 0,01 bis 0,9 g/$cm^3$.

Vernetzen der geschäumten Mischung

In der zweiten Stufe des Verfahrens erfolgt die Vernetzung des basischen Polymeren unter Bildung eines wasserabsorbierenden basischen Polymeren. Das ursprünglich wasserlösliche Polymer wird durch die Vernetzung wasserunlöslich. Man erhält ein Hydrogel eines basischen Polymeren. Die vernetzbaren schaumförmigen Mischungen werden beispielsweise in geeignete Formen transferiert und darin erhitzt, so daß die Vernetzer mit dem basischen Polymer reagieren. Das geschäumte Material kann beispielsweise in der gewünschten Stärke auf ein temporäres Trägermaterial, das vorteilhafterweise mit einer Antihaftbeschichtung versehen ist, aufgebracht werden. Man kann beispielsweise den Schaum auf eine Unterlage aufrakeln. Eine andere Möglichkeit besteht darin, die schaumförmige wäßrige Mischung in Formen einzufüllen, die ebenfalls antihaftbeschichtet sind.

Da die geschäumte wäßrige Mischung eine lange Standzeit aufweist, eignet sich diese Mischung auch für die Herstellung von Verbundmaterialien. Sie kann beispielsweise auf ein permanentes Trägermaterial aufgebracht werden, z.B. Folien aus Polymeren (z.B. Folien aus Polyethylen, Polypropylen oder Polyamid) oder Metallen wie Aluminium. Man kann die geschäumte wäßrige Mischung auch auf Vliese, Fluff, Tissues, Gewebe, natürliche oder synthetische Fasern, oder auf andere Schäume auftragen. Bei der Herstellung von Verbundmaterialien kann es unter Umständen vorteilhaft sein, den Schaum in Gestalt von bestimmten Strukturen oder in unterschiedlicher Schichtdicke auf ein Trägermaterial aufzubringen. Es ist jedoch auch möglich, den Schaum auf Fluff-Schichten oder Vliese aufzutragen und diese Materialien so zu imprägnieren, daß der Fluff nach der Vernetzung integraler Bestandteil des Schaums ist. Die in der ersten Verfahrensstufe erhältliche geschäumte wäßrige Mischung kann auch zu großen Blöcken geformt und vernetzt werden. Die Blöcke können nach der Vernetzung zu kleineren Formkörpern geschnitten oder gesägt werden. Man kann auch sandwichartige Strukturen herstellen, indem man eine geschäumte wäßrige Mischung auf eine Unterlage aufträgt, die schaumförmige Schicht mit einer Folie bzw. Vliesen, Tissues, Geweben, Fasern oder anderen Schäumen abdeckt und die sandwichartige Struktur durch Erhitzen vernetzt. Es ist jedoch auch möglich, vor oder nach dem vernetzen mindestens eine weitere Schicht aus einer geschäumten, vernetzbaren Schicht aufzutragen und gegebenenfalls mit einer weiteren Folie, Vliesen, Tissues, Geweben, Fasern oder anderen Materialien zu bedecken. Der Verbund wird dann in der zweiten Verfahrensstufe der Vernetzung unterworfen. Man kann jedoch auch sandwichartige Strukturen mit weiteren Schaumschichten gleicher oder unterschiedlicher Dichte herstellen.

Erfindungsgemäße Schaumschichten mit einer Schichtdicke von bis zu etwa 1 Millimeter stellt man beispielsweise durch einseitiges Erwärmen oder insbesondere durch einseitiges Bestrahlen der geschäumten vernetzbaren wäßrigen Mischung her. Falls dickere Schichten eines Schaums hergestellt werden sollen, z.B. Schäume mit Dicken von mehreren Zentimetern, ist die Erwärmung des vernetzbaren geschäumten Materials mit Hilfe von Mikrowellen

besonders vorteilhaft, weil auf diesem Wege eine relativ gleichmä-ßige Erwärmung erreicht werden kann. Die Vernetzung erfolgt dabei beispielsweise bei Temperaturen von 20 bis 180°C, vorzugsweise in dem Bereich von 20 bis 100°C, insbesondere bei Temperaturen von 65 bis 80°C. Bei dickeren Schaumschichten, die vernetzt werden sollen, wird die geschäumte Mischung beidflächig mit Wärme behandelt, z.B. mit Hilfe einer Kontaktheizung oder durch Bestrahlung. Die Dichte des basischen schaumförmigen Hydrogels entspricht im Wesentlichen der Dichte der vernetzbaren wäßrigen Mischung. Man erhält somit Schaumstoffe aus wasserabsorbierenden basischen Polymeren mit einer Dichte von beispielsweise 0,01 bis 0,9 g/$cm^3$, vorzugsweise 0,1 bis 0,7 g/$cm^3$. Die schaumförmigen basischen Polymeren sind offenzellig. Der Anteil an offenen Zellen beträgt beispielsweise mindestens 80%, vorzugsweise liegt er oberhalb von 90%. Besonders bevorzugt sind Schäume mit einem offenzelligen Anteil von 100%. Der Anteil an offenen Zellen im Schaum wird beispielsweise mit Hilfe der Scanning Electron Microscopy bestimmt.

Schaumstoffe mit besonders hoher Wasseraufnahmekapazität und einem verbesserten Aufnahmevermögen für elektrolythaltige wäßrige Lösungen sind durch Vernetzen von geschäumten wäßrigen Mischungen erhältlich, die, bezogen auf die Polymermischung, 10 bis 90 Gew.-% eines feinteiligen, wasserabsorbierenden, sauren Polymeren enthalten. Das saure Hydrogel kann als festes partikuläres Polymer oder als geschäumtes teilchenförmiges Polymer mit Teilchengrößpen von beispielsweise 10 bis 2000 μm in den erfindungsgemäßen Schaumstoffen vorliegen.

Nach dem Vernetzen der geschäumten Mischung oder während des Vernetzens erfolgt die Trocknung des schaumförmigen Hydrogels. Hierbei werden Wasser und andere flüchtige Bestandteile aus dem vernetzten schaumförmigen Hydrogel entfernt. Die Trocknung erfolgt vorzugsweise nach dem Vernetzen des schaumförmigen Hydrogels. Beispiele für geeignete Trocknungsverfahren sind thermische Konvektionstrocknung wie beispielsweise Horden-, Kammer-, Kanal-, Flachbahn-, Teller-, Drehtrommel-, Rieselschacht-, Siebband-, Strom-, Wirbelschicht-, Fließbett-, Schaufel- und Kugelbetttrocknung, thermische Kontakttrocknung wie Heizteller-, Walzen-, Band-, Siebtrommel-, Schnecken-, Taumel- und Kontaktscheibentrocknung, Strahlungstrocknung wie beispielsweise Infrarottrocknung, dielektrische Trocknung z.B. Mikrowellentrocknung und Gefriertrocknung. Um unerwünschte Zersetzungs- und Vernetzungsreaktionen zu vermeiden, kann es vorteilhaft sein, die Trocknung bei reduziertem Druck, unter einer Schutzgasatmosphäre und/oder unter schonenden thermischen Bedingungen, bei denen die Produkttemperatur 120°C, bevorzugt 100°C, nicht überschreitet, durchzuführen. Besonders geeignete Trocknungsverfahren stellen die (Vakuum)bandtrocknung und die Schaufeltrocknung dar.

Nach dem Trocknungsschritt enthält das schaumförmige Hydrogel meistens kein Wasser mehr. Der Wassergehalt des geschäumten Materials kann jedoch durch Befeuchten des Schaums mit Wasser oder Wasserdampf beliebig eingestellt werden. Meistens beträgt der Wassergehalt des schaumförmigen Gels 1 bis 60 Gew.-%, vorzugsweise 2 bis 10 Gew.-%. Mit Hilfe des Wassergehalts kann die Flexibilität des schaumförmigen Hydrogels eingestellt werden. Vollständig getrocknete schaumförmige Hydrogele sind hart und spröde, während geschäumte Materialien mit einem Wassergehalt von beispielsweise 5 bis 20 Gew.-% flexibel sind. Die geschäumten Hydrogele können entweder in Form von Folien oder Granulaten direkt verwendet werden oder man schneidet aus dickeren Blöcken einzelne Platten oder Folien.

Die oben beschriebenen schaumförmigen Hydrogele können jedoch noch dahingehend modifiziert werden, daß man die Oberfläche der geschäumten Materialien nachvernetzt. Dadurch kann die Gelstabilität der Formkörper aus den geschäumten Hydrogelen verbessert werden. Um eine Oberflächennachvernetzung durchzuführen, behandelt man die Oberfläche der Formkörper aus den geschäumten Hydrogelen mit mindestens einem Vernetzungsmittel und erhitzt die so behandelten Formkörper auf eine Temperatur, bei der die Vernetzer mit den Hydrogelen reagieren. Geeignete Vernetzer sind oben unter (b) beschrieben. Diese Verbindungen können ebenfalls für die Nachvernetzung der Oberfläche der schaumförmigen Hydrogele verwendet werden. Bevorzugt eingesetzte Vernetzer sind die oben bereits genannten Gylcidylether und Ester der Acrylsäure und/oder Methacrylsäure mit den Umsetzungsprodukten aus 1 Mol Trimethylolpropan und 6 bis 15 Mol Ethylenoxid.

Die Vernetzer für die Oberflächennachvernetzung werden vorzugsweise in Form einer wasserhaltigen Lösung auf die Schaumstoffoberfläche aufgebracht. Die wasserhaltige Lösung kann wassermischbare organische Lösemittel enthalten, z.B. Alkohole wie Methanol, Ethanol und/oder i-Propanol oder Ketone wie Aceton. Die Menge an Vernetzer, die auf die Oberfläche der schaumförmigen Hydrogele aufgetragen wird, beträgt beispielsweise 0,1 bis 5 Gew.-%, vorzugsweise 1 bis 2 Gew.-%. Die Oberflächennachvernetzung der schaumförmigen Hydrogele erfolgt durch Erhitzen der mit mindestens einem Vernetzer behandelten schaumförmigen Hydrogele bei einer Temperatur von beispielsweise 60 bis 120°C, vorzugsweise bei 70 bis 100°C. Nach der Oberflächenvernetzung kann der Wassergehalt der geschäumten, an der Oberfläche nachvernetzten Hydrogele ebenfalls auf Werte von 1 bis 60 Gew.-% eingestellt werden.

Die erfindungsgemäßen schaumförmigen Hydrogele, die gegebenenfalls an der Oberfläche nachvernetzt sind, können für alle Zwecke verwendet werden, für die beispielsweise die aus der EP-B-0 858 478 bekannten wasserabsorbierenden, schaumförmigen Hydrogele auf Basis von Säuregruppen enthaltenden Polymeren wie vernetzten Polyacrylaten, eingesetzt werden. Die erfindungsgemäßen schaumförmigen Hydrogele eignen sich beispielsweise für den Einsatz in Hygieneartikeln zur Absorption von Körperflüssigkeiten, in Verbandmaterial zur Abdeckung von Wunden, als Dichtungsmaterial, als Verpackungsmaterial, als Bodenverbesserungsmittel, als Bodenersatzstoff, zur Entwässerung von Schlämmen, zur Absorption saurer wäßriger Abfälle, zum Eindicken wäßriger Lacke bei der Entsorgung von Restmengen

an Lacken, zur Entwässerung von wasserhaltigen Ölen oder Kohlenwasserstoffen oder als Material für Filter in Lüftungssystemen.

Von besonderer Bedeutung ist die Anwendung der erfindungsgemäßen schaumförmigen Hydrogele in Hygieneartikeln, wie Babywindeln, Damenbinden, Inkontinenzartikeln und in Verbandmaterial. Sie erfüllen beispielsweise in Hygieneartikeln mehrere Funktionen, nämlich Akquisition, Distribution und/oder Speicherung von Körperflüssigkeiten. Die Oberfläche der schaumförmigen Hydrogele kann gegebenenfalls durch Behandlung mit Tensiden oder unvernetzten Vinylamineinheiten enthaltenden Polymeren modifiziert werden. Man erzielt dadurch eine Verbesserung der Akquisition von Flüssigkeiten. Schaumstoffschichten aus den erfindungsgemäß schaumförmigen Hydrogelen können beispielsweise in einer Stärke von 1 bis 5 mm in einem der obengenannten Hygieneartikel als absorbierender Kern zwischen einer oberen flüssigkeitsdurchlässigen Abdeckung und einer unteren flüssigkeitsunduchlässigen Schicht aus einer Folie aus z.B. Polyethylen oder Polypropylen angeordnet sein. Die flüssigkeitsdurchlässige Schicht des Hygieneartikels steht bei der Anwendung in direktem Kontakt mit der Haut des Anwenders. Dieses Material besteht überlicherweise aus einem Vlies aus natürlichen Fasern wie Cellulosefasern oder Fluff. Gegebenenfalls ist oberhalb und/oder unterhalb des absorbierenden Kerns noch eine Tissueschicht angeordnet. Zwischen der untern Schicht des Hygieneartikels und dem absorbierenden Kern kann gegebenenfalls noch eine Speicherschicht aus einem herkömmlichen partikulären anionischen Superabsorber vorhanden sein. Wenn man die geschäumten basischen Hydrogele als absorbierenden Kern in Windeln einsetzt, so kann aufgrund der offenzelligen Struktur der geschäumten basischen Hydrogele die normalerweise in einzelnen Mengen auf einmal beaufschlagte Körperflüssigkeit zügig abgeführt werden. Dadurch wird dem Anwender ein angenehmes Gefühl der Oberflächentrockenheit der Windel vermittelt.

## Bestimmungsmethoden

### Dichte

Jede geeignete gravimetrische Methode kann zur Dichtebestimmung des Mehrkomponenten-Schaumstoffsystems herangezogen werden. Ermittelt wird die Masse an festem Mehrkomponenten-Schaumstoffsystem pro Volumeneinheit Schaumstoffstruktur. Ein Verfahren zur Dichteermittlung des Mehrkomponenten-Schaumstoffsystems ist in der ASTM Methode Nr. D 3574-86, Test A, beschrieben. Diese Methode wurde ursprünglich zur Dichtebestimmung von Urethanschäumen entwickelt, kann aber auch zu diesem Zweck herangezogen werden. Danach wird bei einer vorkonditionierten Probe, wie in der Methode beschrieben, bei 22 +/- 2 °C deren Trockenmasse und Volumen ermittelt. Volumenbestimmungen größerer Probenabmessungen werden unter Normaldruck durchgeführt.

### Free swell capacity (FSC)

Bei dieser Methode wird die freie Quellbarkeit des Mehrkomponenten-Schaumstoffsystems im Teebeutel bestimmt. Zur Bestimmung der FSC werden 0,2000 $\pm$ 0,0050 g getrockneter Schaumstoff in einem 60 x 85 mm großen Teebeutel eingeführt, der anschließend verschweißt wird. Der Teebeutel wird für 30 Minuten in einen Überschuß von Testlösung gegeben (mindestens 0,83 1 Kochsalz-Lösung / 1 g Polymerpulver). Der Teebeutel wird anschließend für 10 Minuten abtropfen gelassen, indem er an einer Ecke aufgehangen wird. Die Bestimmung der Flüssigkeitsmenge geschieht durch Auswägen des Teebeutels.

Als Testlösung wurde 0,9 Gew.%ige NaCl-Lösung eingesetzt.

### Akquisitionszeit

Das Mehrkomponenten-Schaumstoffsystems wird zur in 1,5mm bzw. 2 mm bzw. 4 mm dicke Schichten geschnitten. Eine kommerziell verfügbare Windel wird vorsichtig aufgeschnitten, das als Akquisitionsmedium dienende high-loft entnommen und statt dessen das Mehrkomponenten-Schaumstoffsystem der Abmessung 7 x 7 cm eingelegt. Die Windel wird wieder verschlossen. Die Aufgabe von 0.9% Kochsalz Lösung erfolgt durch eine Kunststoffplatte mit einem Ring in der Mitte (Innendurchmesser des Ringes 6,0 cm, Höhe 4,0 cm). Die Platte wird belastet mit einem Gewichten, so daß die Gesamtbelastung der Windel 13,6 g/cm$^2$ beträgt. Die Kunststoffplatte wird auf der Windel so plaziert, daß der Mittelpunkt der Windel gleichzeitig die Mitte des Aufgaberinges darstellt. Es werden dreimal 10 ml 0.9% NaCl Lösung aufgegeben. Die 0,9% NaCl Lösung wird in einem Meßzylinder abgemessen und durch den Ring in der Platte in einem Schuß auf die Windel aufgegeben. Gleichzeitig mit der Aufgabe wird die Zeit gemessen, die zum kompletten Eindringen der Lösung in die Windel notwendig ist. Die gemessene Zeit wird als Akquisitionszeit 1 notiert. Danach wird die Windel mit einer Platte für 10 Minuten belastet, wobei die Belastung weiterhin bei 13,6 g/cm$^2$ gehalten wird. Nach dieser Zeit wird die Platte entfernt, auf den Mittelpunkt werden 10 g $\pm$0,5 g vom Filterpapier (Schleicher & Schuell S&S 2282, 10x10cm) gelegt und mit einem Gewicht von 1200 g für 15 s belastet. Nach dieser Zeit wird das Gewicht entfernt, und das Filterpapier wird zurückgewogen. Der Gewichtsunterschied wird als Rewet 1 notiert. Danach wird die

Kunststoffplatte mit Aufgabering erneut auf die Windel gelegt und die zweite Aufgabe der Flüssigkeit erfolgt. Die gemessene Zeit wird als Acquisition Time 2 notiert. Die Prozedur wird wiederholt wie beschrieben. Auf diese Weise werden Rewet 2 und 3 sowie Acquisition Time 3 erhalten.

Zentrifugenretentionskapazität (CRC = Centrifuge Retention Capacity)

Bei dieser Methode wird die freie Quellbarkeit des Mehrkomponenten-Schaumstoffsystems im Teebeutel bestimmt. Zur Bestimmung der CRC werden 0,2000 ± 0,0050 g getrockneter Mehrkomponenten-Schaumstoff in einem 60 x 85 mm großen Teebeutel eingeführt, der anschließend verschweißt wird. Der Teebeutel wird für 30 Minuten in einen Überschschuß von 0,9 Gew.%igen Kochsalzlösung gegeben (mindestens 0,83 1 Kochsalz-Lösung / 1 g Polymerpulver). Anschließend wird der Teebeutel 3 Minuten lang bei 250 G zentrifugiert. Die Bestimmung der Flüssigkeitsmenge geschieht durch Auswägen des zentrifugierten Teebeutels.
Als Testlösung wurde 0,9 Gew.%ige NaCl-Lösung eingesetzt.

Free Swell Rate (FSR)

Zur Bestimmung der Free Swell Rate werden 0,50 g ($W_H$) des Mehrkomponenten-Schaumstoffsystems auf dem Boden einer Plastikschale mit einem runden Boden von ca. 6 cm vorgelegt. Die Plastikschale hat eine Höhe von ca. 2,5 cm und besitzt eine quadratische Öffnung von ca. 7,5 cm x 7,5 cm. Mit Hilfe eines Trichters werden nun 10 g ($W_U$) einer 0,9% NaCl Lösung, in das Zentrum der Plastikschale zugegeben. Sobald die Flüssigkeit Kontakt mit dem Mehrkomponenten-Schaumstoffsystem hat, wird die Zeitmessung begonnen und erst dann gestoppt, wenn das Mehrkomponenten-Schaumstoffsystem die gesamte Flüssigkeit vollständig aufgenommen hat, d. h. bis keine freie Flüssigkeit mehr zu erkennen ist. Diese Zeit wird als $t_A$ notiert. Die Free Swell Rate berechnet sich dann gemäß

$$FSR = W_U / (W_H \times t_A).$$

Absorption gegen Druck (AAP Absorbency Against Pressure) (0,3 psi) (21 g/cm$^2$)
Die Meßzelle zur Bestimmung der AAP 0,3 psi (21 g/cm$^2$) stellt ein Plexiglas-Zylinder mit einem Innendurchmesser von 60 mm und einer Höhe von 50 mm dar, der an der Unterseite einen angeklebten Edelstahl-Siebboden mit einer Maschenweite von 36 μm besitzt. Zu der Meßzelle gehört weiterhin eine Plastikplatte mit einem Durchmesser von 59 mm und ein Gewicht, welches zusammen mit der Plastikplatte in die Meßzelle hineingestellt werden kann. Das Gewicht der Plastikplatte und das Gewicht entsprechen zusammen einer Gewichtsbelastung von 0,3 psi (21 g/cm$^2$). Zur Durchführung der Bestimmung der AAP 0,3 psi (21 g/cm$^2$) wird das Gewicht des leeren Plexiglas-Zylinders und der Plastikplatte ermittelt und als Wo notiert. Dann wird ein Stück des Mehrkomponenten-Schaumstoffsystems von 20mm Durchmesser in den Plexiglas-Zylinder gegeben und eingewogen. Anschließend wird die Plastikplatte vorsichtig in den Plexiglas-Zylinder hineingelegt und die gesamte Einheit gewogen; das Gewicht wird als $W_a$ notiert. Nun wird das Gewicht auf die Plastikplatte in dem Plexiglas-Zylinder gestellt. In die Mitte der Petrischale mit einem Durchmesser von 200 mm und einer Höhe von 30 mm wird eine keramische Filterplatte mit einem Durchmesser von 120 mm und einer Porosität 0 gelegt und soviel 0,9 Gew.%ige Natriumchloridlösung eingefüllt, daß die Flüssigkeitsoberfläche mit der Filterplattenoberfläche abschließt, ohne daß die Oberfläche der Filterplatte benetzt wird. Anschliessend wird ein rundes Filterpapier mit einem Durchmesser von 90 mm und einer Porengröße < 20 μm (S&S 589 Schwarzband von Schleicher & Schüll) auf die keramische Platte gelegt. Der das Mehrkomponenten-Schaumstoffsystem enthaltende Plexiglas-Zylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglas-Zylinder entfernt. Der gequollenes Mehrkomponenten-Schaumstoffsystem enthaltende Plexiglas-Zylinder wird zusammen mit der Plastikplatte ausgewogen und das Gewicht als $W_b$ notiert.
Die Absorption gegen Druck (AAP) wird wie folgt berechnet:

$$AAP\ 0.3\ psi\ (21\,g/cm^2)\ [g/g] = [W_b - W_a] / [W_a - W_0]$$

K-Wert

Der K-Wert wurde nach H. Fikentscher, Cellulose-Chemie, Band 13, 52-63 und 71-74 (1932) in 5 gew.-%iger wäßriger Lösung bei pH 7, 25°C und einer Polymerkonzentration von 0,5 Gew.-% bestimmt.

Steifigkeit (Stiffness)
Zugfestigkeit (Tensile strength)
Zähigkeit (Toughness)
Maximale Dehnung (Nominal strain at max load)
Bruchdehnung (Nominal strain at break)

wurden jeweils bestimmt nach DIN/EN ISO 527-1, wobei der verwendete Probekörper die Bedingung nach DIN 53448/A erfüllte, die Einspannlänge betrug 30 mm, die Prüfgeschwindigkeit 6 mm/min.

Sofern aus dem Zusammenhang nichts anderes hervorgeht, bedeuten die Prozentangaben in den Beispielen Gewichtsprozent.

Beispiel 1

Zu 300 g einer 10 %igen ultrafiltrierten wäßrigen Lösung von Polyvinylamin mit einem K-Wert von 90 fügte man 15 g einer 15 %igen wäßrigen Lösung eines handelsüblichen Tensids (Additionsprodukt von 80 Mol Ethylenoxid an 1 Mol eines C16/C18-Alkoholgemisches) und 15 g einer 5 %igen wäßrigen Lösung von Ethylenglykoldiglycidylether als Vernetzer. Die vernetzbare Mischung wurde 1 Minute im Scherfeld eines Ultraturrax-Rührers geschäumt und danach auf eine Unterlage aus Teflon gegossen, die mit einer Umrandung aus Aluminium versehen war. Die Form, die die geschäumte vernetzbare Mischung enthielt, wurde über Nacht in einem Trockenschrank bei einer Temperatur von 70°C gelagert. Dabei wurde das Polyvinylamin vernetzt und der Schaum vollständig getrocknet. Das erhaltene schaumförmige Hydrogel wurde anschließend auf einen Wassergehalt von 5 % eingestellt. Es hatte die in Tabelle 1 angegebenen Eigenschaften.

Tabelle 1

| | |
|---|---|
| Absorption unter Druck (AAP) | 13,8 g/g |
| Free Swell Capacity (FSC) | 24,4 g/g |
| Zentrifugenretentionskapazität (CRC) | 12,7 g/g |
| Free Swell Rate (FSR) | <0,05 g/g.sec. |

Beispiel 2

Zu 300 g einer 10 %igen ultrafiltrierten wäßrigen Lösung von Polyvinylamin mit einem K-Wert von 90 fügte man 15 g einer 15 %igen wäßrigen Lösung eines handelsüblichen Tensids (Additionsprodukt von 80 Mol Ethylenoxid an 1 Mol eines C16/C18-Alkoholgemisches) und 15 g einer 5 %igen wäßrigen Lösung von Ethylenglykoldiglycidylether als Vernetzer. Außerdem stellte man Mischungen her, die die in Tabelle 2 angegebenen Mengen an Pentan enthielten.

Die vernetzbaren Mischungen wurden danach jeweils 1 Minute im Scherfeld eines Ultraturrax-Rührers geschäumt und danach auf eine Unterlage aus Teflon gegossen, die mit einer Umrandung aus Aluminium versehen war. Die Höhe der Schaumschicht in der Form betrug 6 mm. Die Form, die die geschäumte vernetzbare Mischung enthielt, wurde über Nacht in einem Trockenschrank bei einer Temperatur von 70°C gelagert. Dabei wurde das Polyvinylamin vernetzt und der Schaum vollständig getrocknet. Die jeweils erhaltenen schaumförmigen Hydrogele wurde anschließend auf einen Wassergehalt von 5 % eingestellt. Sie hatten die in den Tabellen 2 und 3 angegebenen Eigenschaften.

Tabelle 2

| Wt % of Pentane | Dichte $g/cm^3$ | AAP @ 0,3psi (21 $g/cm^2$) g/g | FSC g/g | CRC g/g | FSR g/g/sec |
|---|---|---|---|---|---|
| 0% Pentan | 0,34 | 13,8 | 24,4 | 12,7 | <0,05 |
| 2.5% Pentan | 0,16 | 7,3 | 12,8 | 7,8 | 0,06 |
| 5% Pentan | 0,18 | 7,8 | 44,8 | 14,9 | 0,3 |
| 10% Pentan | 0,18 | 16,5 | 33,0 | 11,5 | 2,8 |

Tabelle 3

| | 0% Pentan | 10% Pentan |
|---|---|---|
| **Eigenschaften bei 5 % Wassergehalt** | | |
| Stiffness kPa | 220 ± 28 | 420 ± 70 |
| Tensile strength kPa | 86 ± 2,7 | 130 ± 13 |
| Toughness $J/m^2$ | 3050 ± 350 | 4000 ± 780 |
| Nominal strain at max load % | 150 ± 7,5 | 140 ± 19 |
| Nominal strain at break % | 160 ± 7,8 | 145 ± 19 |
| **Eigenschaften im gequollenen Zustand** | | |
| Stiffness kPa | 56 ± 9,1 | 140 ± 11 |
| Tensile strength kPa | 25 ± 1,5 | 25 ± 9,2 |
| Toughness $J/m^2$ | 353 ± 42 | 200 ± 69 |
| Nominal strain at max load % | 51 ±5,4 | 14 ± 4 |
| Nominal strain at break % | 51 ± 5,6 | 14 ± 4 |

Beispiel 3

Zu 300 g einer 10 %igen ultrafiltrierten wäßrigen Lösung von Polyvinylamin mit einem K-Wert von 90 fügte man 15 g einer 15 %igen wäßrigen Lösung eines handelsüblichen Tensids (Additionsprodukt von 80 Mol Ethylenoxid an 1 Mol eines C16/C18-Alkoholgemisches) und 15 g einer 5 %igen wäßrigen Lösung von Ethylenglykoldiglycidylether als Vernetzer. Außerdem stellte man Mischungen her, die die in Tabelle 4 angegebenen Mengen an Cellulosefasern (Technocel Fasern 1000, Länge der Fasern 1000 μm) enthielten. Die wäßrigen vernetzbaren Mischungen wurden dann jeweils 5 Minuten bei einer Rührerdrehzahl von 200 UpM homogenisiert und danach 5 Minuten bei 750 UpM unter Einleiten von Stickstoff in einer Menge von 100 1/h geschäumt.

Die so hergestellten schaumförmigen Mischungen wurden dann jeweils auf eine Unterlage aus Teflon gegossen, die mit einer Umrandung aus Aluminium versehen war. Die Höhe der Schaumschicht in den Formen betrug 6 mm. Die Formen, die die geschäumten vernetzbaren Mischungen enthielten, wurden über Nacht in einem Trockenschrank bei einer Temperatur von 70°C gelagert. Dabei wurde das Polyvinylamin vernetzt und der Schaum vollständig getrocknet. Die jeweils erhaltenen faserhaltigen,schaumförmigen Hydrogele wurde anschließend auf einen Wassergehalt von 5 % eingestellt. Sie hatten die in den Tabellen 4 und 5 angegebenen Eigenschaften.

Tabelle 4

| Cellulosefasern [%] | Dichte $g/cm^3$ | AAP@ 0.3psi (21 $g/cm^2$) g/g | FSC [g/g] | CRC [g/g] | FSR $g/g/cm^3$ |
|---|---|---|---|---|---|
| 0% | 0,34 | 13,8 | 24,4 | 12,7 | <0,05 |
| 25% | 0,35 | 10,7 | 23,6 | 5,6 | 4 |
| 50% | 0,41 | 10,6 | 23,8 | 4,5 | < 0,05 |
| 100% | 0,42 | 10,6 | 21,1 | 3,6 | < 0,06 |
| 200% | 0,43 | 4,4 | 8,2 | 2,8 | < 0,06 |

Tabelle 5

| | Cellulosefaseranteil in der vernetzbaren Mischung | | | |
|---|---|---|---|---|
| | 0% | 25% | 50% | 200% |
| Eigenschaften der schaumförmigen Hydrogele bei 5 % Wassergehalt | | | | |
| Stiffness kPa | 220 ± 28 | 1100 ± 180 | 1800 ± 270 | 6200 ± 500 |

(fortgesetzt)

| Eigenschaften der schaumförmigen Hydrogele bei 5 % Wassergehalt | | | | |
|---|---|---|---|---|
| Tensile strength kPa | 86 ± 2,7 | 240 ± 15 | 330 ± 14 | 400 ± 110 |
| Toughness J/m$^2$ | 3050 ± 350 | 2100 ± 160 | 1600 ± 140 | 1100 ± 260 |
| Nominal strain at max load % | 150 ± 7,5 | 51,3 ± 1 | 27 ± 2,2 | 9 ± 1,6 |
| Nominal strain at break % | 160 ± 7,8 | 58,3 ± 0,89 | 32 ± 2,7 | 20 ± 5,1 |
| Eigenschaften der schaumförmigen Hydrogele im gequollenen Zustand | | | | |
| Stiffness kPa | 56 ± 9,1 | 140 ± 16 | 310 ± 22 | 850 ± 94 |
| Tensile strength kPa | 25 ± 1,5 | 34,5 ± 0,22 | 50 ± 2,5 | 82 ± 8,6 |
| Toughness J/m$^2$ | 353 ± 42 | 221 ± 11 | 180 ± 19 | 180 ± 24 |
| Nominal strain at max load % | 51 ±5,4 | 34,9 ± 1,1 | 18,7 ± 0,87 | 11,8 ± 0,83 |
| Nominal strain at break % | 51 ± 5,6 | 36 ± 1,4 | 20 ± 1,5 | 20 ± 3 |

Beispiel 4

Zu 300 g einer 10 %igen ultrafiltrierten wäßrigen Lösung von Polyvinylamin mit einem K-Wert von 90 fügte man 15 g einer 15 %igen wäßrigen Lösung eines handelsüblichen Tensids (Additionsprodukt von 80 Mol Ethylenoxid an 1 Mol eines C16/C18-Alkoholgemisches) und 15 g einer 5 %igen wäßrigen Lösung von Ethylenglykoldiglycidylether als Vernetzer. Die Bestandteile der Mischung wurden jeweils unter Durchleiten eines Stickstoffstroms von 100 1/h zunächst 5 Minuten bei 200 UpM und danach 5 Minuten bei 750 UpM gerührt, wobei man eine schaumförmige vernetzbare Mischung erhielt.

Die so hergestellte schaumförmige Mischung wurde dann auf eine Unterlage aus Teflon gegossen, die mit einer Umrandung aus Aluminium versehen war. Die Höhe der Schaumschicht in den Formen betrug 6 mm. Die Formen, die die geschäumte vernetzbare Mischung enthielt, wurde über Nacht in einem Trockenschrank bei einer Temperatur von 70°C gelagert. Dabei wurde das Polyvinylamin vernetzt und der Schaum vollständig getrocknet. Proben des so hergestellten Schaumstoffs wurden auf einen Wassergehalt von 5 % eingestellt. Danach sprühte man jeweils die in Tabelle 6 angegebenen Säuren auf die Schaumstoffproben, so daß die Schaumstoffoberfläche einen pH-Wert im sauren Bereich hatte. Danach beurteilte man die Flexibität der Schäume. Die Ergebnisse sind in Tabelle 6 angegeben.

Tabelle 6

| Schaum behandelt mit | Neutralisationsgrad [%] | pH | FSC [g/g] | CRC [g/g] | Flexibilität bei 20% RH |
|---|---|---|---|---|---|
| - | 0 | 10,0 | 25 | 13 | Flexibel |
| HCl | 75 | 4,3 | 48 | 27 | Hart |
| Methansulfonsäure | 75 | 3,6 | 32 | 17 | Flexibel |
| Milchsäure | 75 | 5,6 | 31 | 13 | Flexibel |
| Citronensäure | 75 | 3,3 | 3 | 1 | Hart |
| Hydroxybernsteinsäure | 75 | 3,2 | 4 | 2 | Hart |
| Amidosulphonsäure | 75 | 4,4 | 7 | 4 | Hart |
| Ascorbinsäure | 75 | 4,2 | 4 | 3 | Hart |
| Glykolsäure | 75 | 4,8 | 13 | 10 | Teilweise flexibel |
| Cyanessigsäure | 75 | 5,3 | 28 | 14 | Teilweise flexibel |

Herstellung eines sauren teilchenförmigen wasserabsorbierenden Polymeren (SAP 1)

270g Acrylsäure wurden in ein Becherglas eingewogen. Man gab dann 1,155g Methylenbisacrylamid (MBA) als Vernetzer zu und rührte die Monomeren bis zur vollständigen Lösung. In einem separaten Gefäß wurden 810 g destilliertes Wasser eingewogen und zur Monomermischung gegeben. Die Lösung wurde gerührt, um die Mischung zu

vervollständigen. Die wäßrige Monomerlösung wurde anschließend zum Abkühlen in einen Gefrierschrank aufbewahrt (etwa 1 Stunde).

Mit destilliertem Wasser stellte man eine 10%ige Natriumpersulfatlösung her, und gibt sie in einen gekühlten Polymerisationskessel. Als Initiatorsystem wurden 0,157 g 2-Hydroxy-2-Methyl-1-Phenyl-Propan-1-on (Darocur 1173, Ciba, Photoinitiator) und 2,736 g der 10% Natriumpersulfatlösung zugesetzt. Nach einem abschließenden Vermischungsschritt erhielt man ein homogenes System, das so belassen wurde, bis es eine Temperatur von 10 °C erreicht hatte, bei der dann die Polymerisationsreaktion binnen 12 Minuten durch Bestrahlen mit einer UV. Energie von 20mW$cm^{-2}$ durchgeführt wurde. Man erhielt ein gelförmiges Polymerisat, das zerkleinert und bei 125 °C vollständig getrocknet wurde. Das erhaltene getrocknete Polymerisat wurde gemahlen und die Fraktion mit einer mittleren Teilchengröße von 150µm-450µm abgesiebt.

Beispiel 5

Zu 300 g einer 10 %igen ultrafiltrierten wäßrigen Lösung von Polyvinylamin mit einem K-Wert von 90 fügte man 15 g einer 15 %igen wäßrigen Lösung eines handelsüblichen Tensids (Additionsprodukt von 80 Mol Ethylenoxid an 1 Mol eines C16/C18-Alkoholgemisches) und 15 g einer 5 %igen wäßrigen Lösung von Ethylenglykoldiglycidylether als Vernetzer. Die vernetzbare Mischung wurde 1 Minute im Scherfeld eines Ultraturrax-Rührers geschäumt. Man stellte weitere vernetzbare Mischungen aus den obengenannten Komponenten und den jeweils in Tabelle 7 angegebenen Mengen an Pentan her und schäumte sie innerhalb einer Minute durch Scheren mit Hilfe eines Ultraturrax-Geräts.

Dann wurden 45g SAP 1 (Korngröße 150-450µm) zugegeben und die Mischung durch weiteres Scheren etwa 1 Minute lang wird homogenisiert. Die so hergestellten schaumförmigen Mischungen wurden dann jeweils auf eine Unterlage aus Teflon gegossen, die mit einer Umrandung aus Aluminium versehen war. Die Höhe der Schaumschicht in den Formen betrug 6 mm. Die Formen, die die geschäumten vernetzbaren Mischungen enthielten, wurden über Nacht in einem Trockenschrank bei einer Temperatur von 70°C gelagert. Dabei wurde das Polyvinylamin vernetzt und der Schaum vollständig getrocknet. Die jeweils erhaltenen schaumförmigen Hydrogele wurden anschließend auf einen Wassergehalt von 5 % eingestellt. Sie hatten die in den Tabellen 7 angegebenen Eigenschaften.

Tabelle 7

| Gehalt an Pentan in der wäßr. Mischung an Pentan in der wäßr. Mischung | Schaumdichte g/$cm^3$ | FSC g/g 30min g/g 30 min | CRC g/g 30 min | FSC g/g 4 h | CRC g/g 4 h | AAP g/g 0.3psi (21 g/$cm^2$) | FSR g/g/sec |
|---|---|---|---|---|---|---|---|
| 0% | 0,66 | 10,4 | 6,5 | 23,5 | 18,9 | 7,2 | >0,06 |
| 10% | 0,20 | 49,3 | 20,7 | 57,4 | 25,1 | 30,4 | 0,95 |
| 15% | 0,21 | 49,2 | 19,1 | 56,4 | 23,9 | 30,5 | 0,74 |
| 20% | 0,19 | 50,1 | 19,2 | 56,3 | 24,7 | 27,7 | 0,66 |

Die Meßergebnisse zeigen, daß das Mehrkomponenten-Schaumstoffsystem die beste Performance aufweist, wenn es aus einer Ausgangsmischung mit einer Treibmittelmenge von 10% Pentan, bezogen auf die Gesamtmenge der wäßrigen Ausgangslösung, hergestellt wurde.

Beispiel 6

Zu 300 g einer 10 %igen ultrafiltrierten wäßrigen Lösung von Polyvinylamin mit einem K-Wert von 90 fügte man 15 g einer 15 %igen wäßrigen Lösung eines handelsüblichen Tensids (Additionsprodukt von 80 Mol Ethylenoxid an 1 Mol eines C16/C18-Alkoholgemisches), 15 g einer 5 %igen wäßrigen Lösung von Ethylenglykoldiglycidylether als Vernetzer und 3 g Pentan. Die vernetzbare Mischung wurde 1 Minute im Scherfeld eines Ultraturrax-Rührers geschäumt. Zu Proben der vernetzbaren wäßrigen Mischung fügte man dann 45 g SAP 1 mit der in Tabelle 8 jeweils angegebenen Teilchengrößenverteilung. Die Mischung wurde dann 1 Minute gerührt. Man erhielt eine homogene Mischung.

Die so hergestellten vernetzbaren schaumförmigen Mischungen wurden dann jeweils auf eine Unterlage aus Teflon gegossen, die mit einer Umrandung aus Aluminium versehen war. Die Höhe der Schaumschicht in den Formen

betrug 36 mm. Die Formen, die die geschäumten vernetzbaren Mischungen enthielten, wurden über Nacht in einem Trockenschrank bei einer Temperatur von 70°C gelagert. Dabei wurde das Polyvinylamin vernetzt und der Schaum vollständig getrocknet. Die jeweils erhaltenen schaumförmigen Hydrogele wurden anschließend auf einen Wassergehalt von 5 % eingestellt. Sie hatten die in Tabelle 7 angegebenen Eigenschaften.

Tabelle 8

| Korngröße SAP 1 | Schaumdichte g/cm$^3$ | FSC g/g 30 min | CRC g/g 30 min | FSC g/g 4 h | CRC g/g 4 h | AAP g/g 0.3psi (21 g/cm$^2$) | FSR g/g/sec |
|---|---|---|---|---|---|---|---|
| 150-850 µm | 0,2 | 32,1 | 15,1 | 49,7 | 24,2 | 9,3 | 0,1 |
| 150-450 µm | 0,2 | 53,4 | 23,1 | 64,0 | 27,8 | 9,5 | 0,65 |

Generell zeigt der Korngrößenschnitt zwischen 150 und 450 µm ein deutlich besseres Absorptionsprofil, was zum einen mit einer besseren Integration kleinerer Partikel innerhalb des Schaumsystems und zum anderen mit einer geringeren Behinderung des Transports der abzuführenden Flüssigkeiten innerhalb des Kanalsystems durch größere anquellende Partikel von SAP 1 begründet werden kann.

Beispiel 7

Zu 300 g einer 10 %igen ultrafiltrierten wäßrigen Lösung von Polyvinylamin (PVAm) mit einem K-Wert von 90 fügte man 15 g einer 15 %igen wäßrigen Lösung eines handelsüblichen Tensids (Additionsprodukt von 80 Mol Ethylenoxid an 1 Mol eines C16/C18-Alkoholgemisches), 15 g einer 5 %igen wäßrigen Lösung von Ethylenglykoldiglycidylether als Vernetzer und 3 g Pentan. Die vernetzbare Mischung wurde 1 Minute im Scherfeld eines Ultraturrax-Rührers geschäumt. Zu Proben der vernetzbaren wäßrigen Mischung fügte man dann SAP 1 mit einer mittleren Krongrößenverteilung von 150 - 450 µm in den in Tabelle 9 jeweils angegebenen Gewichtsverhältnissen von Polyvinylamin : SAP 1 zu. Die Mischungen wurden dann jeweils 1 Minute gerührt. Man erhielt eine homogene Mischungen.

Die so hergestellten vernetzbaren schaumförmigen Mischungen wurden dann jeweils auf eine Unterlage aus Teflon gegossen, die mit einer Umrandung aus Aluminium versehen war. Die Höhe der Schaumschicht in den Formen betrug 6 mm. Die Formen, die die geschäumten vernetzbaren Mischungen enthielten, wurden über Nacht in einem Trockenschrank bei einer Temperatur von 70°C gelagert. Dabei wurde das Polyvinylamin vernetzt und der Schaum vollständig getrocknet. Die jeweils erhaltenen schaumförmigen Hydrogele wurden anschließend auf einen Wassergehalt von 5 % eingestellt. Sie hatten die in Tabelle 9 angegebenen Eigenschaften.

Tabelle 9

| Probe | Schaumdichte g/cm$^3$ | FSC g/g 30 min | CRC g/g 30 min | FSC g/g 4 h | CRC g/g 4 h | AAP g/g 0.3psi (21 g/cm$^2$) | FSR g/g/sec |
|---|---|---|---|---|---|---|---|
| 30 PVAm: 70 SAP 1 | 0,20 | 41,7 | 13,5 | 58,6 | 19,9 | 26,3 | 0,12 |
| 40 PVAm: 60 SAP 1 | 0,20 | 49,3 | 20,7 | 57,4 | 25,1 | 30,4 | 0,95 |
| 50 PVAm: 50 SAP 1 | 0,12 | 37,1 | 12,0 | 52,0 | 19,8 | 29,4 | 0,11 |
| 60 PVAm: 40 SAP 1 | 0,12 | 37,5 | 11,9 | 47,3 | 18,0 | 24,8 | 0,29 |

Die beste Performance der hergestellten Schäume wurde bei einer Kombination des Mehrkomponentensystems in einem Verhältnis von PVAm : SAP 1 von 40 : 60 erhalten.

Beispiel 8

Zu 300 g einer 10 %igen ultrafiltrierten wäßrigen Lösung von Polyvinylamin (PVAm) mit einem K-Wert von 90 fügte man 15 g einer 15 %igen wäßrigen Lösung eines handelsüblichen Tensids (Additionsprodukt von 80 Mol Ethylenoxid an 1 Mol eines C16/C18-Alkoholgemisches), 15 g einer 5 %igen wäßrigen Lösung von Ethylenglykoldiglycidylether als Vernetzer und 3 g Pentan. Die vernetzbare Mischung wurde 1 Minute im Scherfeld eines Ultraturrax-Rührers geschäumt. Zu der vernetzbaren wäßrigen Mischung fügte man dann 45 g SAP 1 mit einer mittleren Krongrößenverteilung von 150 - 450 μm und homogenisierte die Mischung dann jeweils 1 Minute durch Behandlung mit einem Ultraturrax-Gerät.

Man stellte zwei weitere vernetzbaren schaumförmigen Mischungen der obengenannten Zusammensetzung her und goß sie dann jeweils auf eine Unterlage aus Teflon, die mit einer Umrandung aus Aluminium versehen war. Die Höhe der Schaumschicht in den Formen betrug 6 mm. Die Formen, die die geschäumten vernetzbaren Mischungen enthielten, wurden über Nacht in einem Trockenschrank bei den in Tabelle 10 angegebenen Temperaturen gelagert. Dabei wurde das Polyvinylamin vernetzt und der Schaum vollständig getrocknet. Die jeweils erhaltenen schaumförmigen Hydrogele wurden anschließend auf einen Wassergehalt von 5 % eingestellt. Sie hatten die in Tabelle 10 angegebenen Eigenschaften.

Tabelle 10

| Temperatur | Schaumdichte g/$cm^3$ | FSC g/g 30 min | CRC g/g 30 min | FSC g/g 4 h | CRC g/g 4 h | AAP g/g 0.3psi (21 g/$cm^2$) | FSR g/g/sec |
|---|---|---|---|---|---|---|---|
| 60°C | 0,21 | 47,1 | 21,4 | 50,2 | 29,5 | 28,9 | 0,70 |
| 70°C | 0,21 | 46,0 | 16,7 | 53,6 | 21,0 | 26,5 | 0,43 |
| 90°C | 0,21 | 41,7 | 15,2 | 52,0 | 19,6 | 25,0 | 0,32 |

Vernetzungs- und Trocknungstemperaturen beeinflussen die Performance in unterschiedlichem Maße. Während die Absorptionsleistung im Teabag-Test nach 30 Minuten bei 60°C am höchsten ist, wird im Vergleich zu höheren Temperaturen eine frühere Sättigung beim 4 Stunden - Wert erreicht. Retentionswerte und Anquellgeschwindigkeit sind allerdings bei dieser Temperatur optimal.

Beispiel 9

Zu 300 g einer 10 %igen ultrafiltrierten wäßrigen Lösung von Polyvinylamin (PVAm) mit einem K-Wert von 90 fügte man 15 g einer 15 %igen wäßrigen Lösung eines handelsüblichen Tensids (Additionsprodukt von 80 Mol Ethylenoxid an 1 Mol eines C16/C18-Alkoholgemisches), 15 g einer 5 %igen wäßrigen Lösung von Ethylenglykoldiglycidylether als Vernetzer und 3 g Pentan. Die vernetzbare Mischung wurde 1 Minute im Scherfeld eines Ultraturrax-Rührers geschäumt. Zu der vernetzbaren wäßrigen Mischung fügte man dann 45 g SAP 1 mit einer mittleren Krongrößenverteilung von 150 - 450 μm und homogenisierte die Mischung dann jeweils 1 Minute durch Behandlung mit einem Ultraturrax-Gerät.

Man stellte weitere vernetzbaren schaumförmigen Mischungen der obengenannten Zusammensetzung her und goß sie dann jeweils auf eine Unterlage aus Teflon, die mit einer Umrandung aus Aluminium versehen war. Die Höhe der Schaumschicht in den Formen betrug 6 mm. Die Formen, die die geschäumten vernetzbaren Mischungen enthielten, wurden über Nacht in einem Trockenschrank bei den in den Tabellen 11 bis 13 angegebenen Temperaturen gelagert. Dabei wurde das Polyvinylamin vernetzt und der Schaum vollständig getrocknet. Danach wurden die Schaumstoffe 1 Stunde bei den in den Tabellen 11 bis 13 angegebenen Temperaturen gelagert, um die Grenzflächen zwischen dem basischen und dem sauren Polymeren zu härten. Die jeweils erhaltenen schaumförmigen Hydrogele wurden anschließend auf einen Wassergehalt von 5 % eingestellt. Sie hatten die in den Tabellen 11 bis 13 angegebenen Eigenschaften.

Tabelle 11

| Trocknung über Nacht bei 60 °C, nachfolgend 1 Stunde Trocknung bei unterschiedlicher Temperatur | | | | | | | |
|---|---|---|---|---|---|---|---|
| Trocknungstemperatur 1 h | Schaumdichte g/$cm^3$ | FSC g/g 30 min | CRC g/g 30 min | FSC g/g 4 h | CRC g/g 4 h | AAP g/g 0.3psi (21 g/$cm^2$) | FSR g/g/sec |
| 0°C | 0,21 | 47,1 | 21,4 | 50,2 | 29,5 | 28,9 | 0,70 |

(fortgesetzt)

| Trocknung über Nacht bei 60 °C, nachfolgend 1 Stunde Trocknung bei unterschiedlicher Temperatur | | | | | | | |
|---|---|---|---|---|---|---|---|
| Trocknungstemperatur 1 h | Schaumdichte g/cm3 | FSC g/g 30 min | CRC g/g 30 min | FSC g/g 4 h | CRC g/g 4 h | AAP g/g 0.3psi (21 g/cm2) | FSR g/g/sec |
| 100°C | 0,21 | 46,4 | 19,2 | 46,6 | 25,7 | 27,2 | 0,50 |
| 125°C | 0,21 | 37,1 | 16,2 | 42,3 | 23,9 | 26,5 | 0,25 |
| 140°C | 0,21 | 27,3 | 13,2 | 35,9 | 19,5 | 27,4 | 0,10 |

Tabelle 12

| Trocknung über Nacht bei 70 °C, nachfolgend 1 Stunde Trocknung bei unterschiedlicher Temperatur | | | | | | | |
|---|---|---|---|---|---|---|---|
| Trocknungstemperatur 1 h | Schaumdichte g/cm3 | FSC g/g 30 min | CRC g/g 30 min | FSC g/g 4 h | CRC g/g 4 h | AAP g/g 0.3psi (21 g/cm2) | FSR g/g/sec |
| 0°C | 0,21 | 46,0 | 16,7 | 53,6 | 21,0 | 26,5 | 0,43 |
| 100°C | 0,21 | 43,2 | 16,6 | 53,2 | 21,5 | 25,4 | 0,46 |
| 125°C | 0,21 | 39,4 | 14,6 | 49,7 | 19,6 | 26,2 | 0,26 |
| 140°C | 0,21 | 31,5 | 12,6 | 40,1 | 16,4 | 23,7 | 0,08 |

Tabelle 13

| Trocknung über Nacht bei 90°C, nachfolgend 1 Stunde Trocknung bei unterschiedlicher Temperatur | | | | | | | |
|---|---|---|---|---|---|---|---|
| Trocknungstemperatur 1 h | Schaumdichte g/cm3 | FSC g/g 30 min | CRC g/g 30 min | FSC g/g 4 h | CRC g/g 4 h | AAP g/g 0.3psi (21g/cm2) | FSR g/g/sec |
| 0°C | 0,21 | 41,7 | 15,2 | 52,0 | 19,6 | 25,0 | 0,32 |
| 100°C | 0,21 | 40,1 | 14,8 | 50,8 | 19,4 | 24,2 | 0,24 |
| 125°C | 0,21 | 35,9 | 15,1 | 46,5 | 19,3 | 22,6 | 0,14 |
| 140°C | 0,21 | 30,1 | 12,5 | 40,9 | 15,8 | 18,7 | 0,09 |

Beispiel 10

Zu 300g einer 10 %igen ultrafiltrierten wäßrigen Lösung von Polyvinylamin mit einem K-Wert von 90 fügte man 15g einer 5%igen wäßrigen Lösung eines handelsüblichen Tensids (Natrium-C14-C17 sek.-Alkylsulfonat, Hostapur® SAS93, Firma Clariant), 15g einer 5 %igen wäßrigen Lösung von Ethylenglykoldiglycidylether als Vernetzer und 3 g Pentan. Außerdem stellte man Mischungen her, die die in Tabelle 14 angegebenen Mengen an Tensid enthielten.

Die vernetzbare Mischung wurde danach jeweils 1 Minute im Scherfeld eines Ultraturrax-Rührers geschäumt und danach auf eine Unterlage aus Teflon gegossen, die mit einer Umrandung aus Aluminium versehen war. Die Form, die die geschäumte vernetzbare Mischung enthielt, wurde über Nacht in einem Trockenschrank bei einer Temperatur von 70°C gelagert. Dabei wurde das Polyvinylamin vernetzt und der Schaum vollständig getrocknet. Das erhaltene schaumförmige Hydrogel wurde anschließend auf einen Wassergehalt von 5 % eingestellt. Die Schäume hatten die in Tabelle 14 angegebenen Eigenschaften. Während ein nach Beispiel 2 hergestellter Schaum steif war, waren die nach den Beispielen 10-1 bis 10-3 erhaltenen Schäume sehr weich.

Tabelle 14

| Beispiel | % Tensid | Dichte g/cm$^3$ | AAP @ 0.3psi (21 g/cm$^2$) g/g | FSC (30 Min.) g/g | CRC g/g | FSR g/g/sec |
|---|---|---|---|---|---|---|
| 10 | 7,5 | 0,19 | 5,2 | 29,9 | 10,8 | 2,88 |
| 10 - 1 | 2,5 | 0,12 | 9 | 35,1 | 11,5 | 7,55 |
| 10 - 2 | 5 | 0,13 | 8,4 | 32,7 | 11,2 | 6,64 |
| 10 - 3 | 10 | 0,13 | 9,3 | 30,1 | 11,3 | 3,29 |

Beispiel 11

Zu 300g einer 10 %igen ultrafiltrierten wäßrigen Lösung von Polyvinylamin mit einem K-Wert von 90 fügte man 7,5g einer 30%igen wäßrigen Lösung eines handelsüblichen Tensids (Alkalimetallsalz von Schwefelsäurehalbestern von Additionsprodukten von Ethylenoxid und Propylenoxid an einen Fettalkohol, Disponil® FES993 IS ex Firma Cognis), 15g einer 5 %igen wäßrigen Lösung von Ethylenglykoldiglycidylether als Vernetzer und 3 g Pentan. Außerdem stellte man Mischungen her, die die in Tabelle 15 angegebenen Mengen an Tensid enthielten.

Die vernetzbare Mischung wurde danach jeweils 1 Minute im Scherfeld eines Ultraturrax-Rührers geschäumt und danach auf eine Unterlage aus Teflon gegossen, die mit einer Umrandung aus Aluminium versehen war. Die Form, die die geschäumte vernetzbare Mischung enthielt, wurde über Nacht in einem Trockenschrank bei einer Temperatur von 70°C gelagert. Dabei wurde das Polyvinylamin vernetzt und der Schaum vollständig getrocknet. Man erhielt ein schaumförmiges Hydrogel, das anschließend auf einen Wassergehalt von 5 % eingestellt wurde. Während ein nach Beispiel 2 hergestellter Schaum steif war, fühlten sich die gemäß den Beispielen 11-1 bis 11-3 hergestellten Schäume sehr weich an. Weitere Eigenschaften der Schäume sind in Tabelle 15 angegeben.

Tabelle 15

| Beispiel | % Tensid | Dichte g/cm$^3$ | AAP @ 0.3psi (21 g/cm$^2$) g/g | FSC (30 Min.) g/g | CRC g/g | FSR g/g/sec |
|---|---|---|---|---|---|---|
| 11 - 1 | 2,5 | 0,105 | 6,7 | 41,5 | 12,4 | 2,4 |
| 11 - 2 | 5 | 0,106 | 8,1 | 40,5 | 11,7 | 3,5 |
| 11 - 3 | 10 | 0,096 | 7 | 38,1 | 11,7 | 3,9 |

Beispiel 12

Zu 300g einer 10 %igen ultrafiltrierten wäßrigen Lösung von Polyvinylamin mit einem K-Wert von 90 fügte man 7,5g einer 30%igen wäßrigen Lösung eines handelsüblichen Tensids (Alkalimetallsalz von Schwefelsäurehalbestern von Additionsprodukten von Ethylenoxid und Propylenoxid an einen Fettalkohol (Disponil® FES 32 IS ex Firma Cognis), 15g einer 5 %igen wäßrigen Lösung von Ethylenglykoldiglycidylether als Vernetzer und 3 g Pentan. Außerdem stellte man Mischungen her, die die in Tabelle 16 angegebenen Mengen an Tensid enthielten.

Die vernetzbare Mischung wurde danach jeweils 1 Minute in Scherfeld eines Ultraturrax-Rührers geschäumt und dann auf eine Unterlage aus Teflon gegossen, die mit einer Umrandung aus Aluminium versehen war. Die Form, die die geschäumte vernetzbare Mischung enthielt, wurde über Nacht in einem Trockenschrank bei einer Temperatur von 70°C gelagert. Dabei wurde das Polyvinylamin vernetzt und der Schaum vollständig getrocknet. Man erhielt ein schaumförmiges Hydrogel, das anschließend auf einen Wassergehalt von 5 % eingestellt wurde. Während ein nach Beispiel 2 hergestellter Schaum steif war, fühlten sich die gemäß den Beispielen 12-1 bis 12-3 hergestellten Schäume sehr weich an. Die Schäume hatten die in Tabelle 16 angegebenen Eigenschaften.

Tabelle 16

| Beispiel | % Tensid | Dichte g/cm$^3$ | AAP @ 0.3psi (21 g/cm$^2$) g/g | FSC (30 Min.) g/g | CRC g/g | FSR g/g/sec |
|---|---|---|---|---|---|---|
| 12 - 1 | 2,5 | 0,094 | 9,1 | 42 | 11,8 | 3,11 |
| 12 - 2 | 5 | 0,083 | 10,4 | 34,9 | 11,5 | 3,11 |
| 12 - 3 | 10 | 0,084 | 10,1 | 36,5 | 11,3 | 2,84 |

Beispiel 13

Zu 300g einer 10 %igen ultrafiltrierten wäßrigen Lösung von Polyvinylamin mit einem K-Wert von 90 fügte man jeweils 15g einer 5%igen wäßrigen Lösung eines handelsüblichen Tensids (Natrium-C14-C17 sek. Alkylsulfonat, Hostapur® SAS93, Firma Clariant) in den in Tabelle 17 angegebenen Mengen, 15g einer 5 %igen wäßrigen Lösung von Ethylenglykoldiglycidylether als Vernetzer und 3 g Pentan. Außerdem stellte man Mischungen her, die die in Tabelle 17 angegebenen Mengen an Tensid enthielten.

Die vernetzbaren Mischung wurden danach jeweils 1 Minute in Scherfeld eines Ultraturrax-Rührers geschäumt. Zu Proben der vernetzbaren wäßrigen Mischung fügte man dann 45g SAP 1. Die Mischung wurde dann 1 Minute gerührt. Man erhielt eine homogene Mischung. Die so hergestellten vernetzbaren schaumförmigen Mischungen wurden dann jeweils auf eine Unterlage aus Teflon gegossen, die mit einer Umrandung aus Aluminium versehen war. Die Form, die die geschäumte vernetzbare Mischung enthielt, wurde über Nacht in einem Trockenschrank bei einer Temperatur von 70°C gelagert. Dabei wurde das erhaltene schaumförmige Hydrogel vollständig getrocknet und anschließend durch Befeuchten mit Wasser auf einen Wassergehalt von 5 % eingestellt. Die Schäume hatten die in Tabelle 17 angegebenen Eigenschaften. Während ein nach Beispiel 6 hergestellter Schau steif war, fühlten sich die nach den Beispielen 13-1 und 13-2 hergestellten Schäume sehr weich an.

Tabelle 17

| Beispiel | % Tensid | Dichte g/cm$^3$ | AAP @ 0.3psi (21 g/cm$^2$) g/g | FSC (30 Min.) g/g | CRC g/g | FSR g/g/sec |
|---|---|---|---|---|---|---|
| 13 - 1 | 2,5 | 0,22 | 8,4 | 43,6 | 18,1 | 1,4 |
| 13 - 2 | 5 | 0,26 | 12,4 | 43,2 | 17,2 | 0,79 |

Beispiel 14

Zu 300g einer 10 %igen ultrafiltrierten wäßrigen Lösung von Polyvinylamin mit einem K-Wert von 90 fügte man 7,5g einer 30%igen wäßrigen Lösung eines handelsüblichen Tensids (Alkalimetallsalz von Schwefelsäurehalbestern von Additionsprodukten von Ethylenoxid und Propylenoxid an einen Fettalkohol (Disponil® FES993 IS ex Firma Cognis), 15g einer 5 %igen wäßrigen Lösung von Ethylenglykoldiglycidylether als Vernetzer und 3 g Pentan.

Die vernetzbare Mischung wurden danach jeweils 1 Minute in Scherfeld eines Ultraturrax-Rührers geschäumt. Zu der geschäumten Probe gab man dann 45 g SAP 1, rührte die Mischung 1 Minute und goß sie danach auf eine Unterlage aus Teflon, die mit einer Umrandung aus Aluminium versehen war. Die Form, die die geschäumte vernetzbare Mischung enthielt, wurde über Nacht in einem Trockenschrank bei einer Temperatur von 70°C gelagert. Man erhielt ein vollständig getrocknetes, schaumförmiges Hydrogel, das anschlie-ßend auf einen Wassergehalt von 5 % eingestellt wurde. Während ein nach Beispiel 6 hergestellter Schaum steif war, fühlte sich der gemäß Beispiel 14-1 erhaltene Schaum sehr weich an. Der Schaum hatte die in Tabelle 18 angegebenen Eigenschaften.

Tabelle 18

| Beispiel | % Tensid | Dichte g/cm$^3$ | AAP @ 0.3psi (21 g/cm$^2$) g/g | FSC (30 Min.) g/g | CRC g/g | FSR g/g/sec |
|---|---|---|---|---|---|---|
| 14 - 1 | 2,5 | 0,16 | 9,6 | 44,1 | 19,5 | 1,3 |

Beispiel 15

Zu 300g einer 10 %igen ultrafiltrierten wäßrigen Lösung von Polyvinylamin mit einem K-Wert von 90 fügte man 7,5g einer 30%igen wässrigen Lösung eines handelsüblichen Tensids (Alkalimetallsalz von Schwefelsäurehalbestern von Additionsprodukten von Ethylenoxid und Propylenoxid an einen Fettalkohol (Disponil® FES 32 IS ex Firma Cognis), 15g einer 5 %igen wäßrigen Lösung von Ethylenglykoldiglycidylether als Vernetzer und 3 g Pentan. Außerdem stellte man eine Mischung her, die die in Tabelle 19 angegebenen Mengen an Tensid enthielt.

Die vernetzbaren Mischungen wurden danach jeweils 1 Minute im Scherfeld eines Ultraturrax-Rührers geschäumt. Zu der geschäumten Probe gab man 45 g SAP 1, rührte die Mischung 1 Minute und goß sie danach auf eine Unterlage aus Teflon, die mit einer Umrandung aus Aluminium versehen war. Die Form, die die geschäumte vernetzbare Mischung enthielt, wurde über Nacht in einem Trockenschrank bei einer Temperatur von 70°C gelagert. Dabei wurde das erhaltene schaumförmige Hydrogel vollständig getrocknet. Der Wassergehalt des Hydrogels wurde danach auf 5

% eingestellt. Der Schaum war sehr weich und hatte die in Tabelle 19 angegebenen Eigenschaften.

Tabelle 19

| Beispiel | % Tensid | Dichte g/cm$^3$ | AAP @ 0.3psi (21 g/cm$^2$) g/g | FSC (30 Min.) g/g | CRC g/g | FSR g/g/sec |
|---|---|---|---|---|---|---|
| 15 - 1 | 2,5 | 0,19 | 7,7 | 42,8 | 19,6 | 0,67 |

## Patentansprüche

1. Schaumstoffe aus wasserabsorbierenden basischen Polymeren, **dadurch gekennzeichnet, daß** die Schaumstoffe herstellbar sind durch

    (I) Schäumen einer vernetzbaren wäßrigen Mischung, die

    (a) mindestens ein basisches Polymer, dessen basische Gruppen gegebenenfalls neutralisiert sind,
    (b) mindestens einen Vernetzer,
    (c) mindestens ein Tensid,
    (d) gegebenenfalls mindestens einen Lösevermittler,
    (e) gegebenenfalls Verdicker, Schaumstabilisatoren, Füllstoffe, Fasern und/oder Zellkeimbildner und
    (f) gegebenenfalls teilchenförmige, wasserabsorbierende saure Polymere
    enthält, wobei man zum Schäumen ein gegenüber Radikalen inertes Gas unter einem Druck von 2 bis 400 bar in der vernetzbaren wäßrigen Mischung löst und sie anschließend auf Atmosphärendruck entspannt oder wobei das Schäumen durch Dispergieren von feinen Blasen eines gegenüber Radikalen inerten Gases erfolgt, und

    (II) Vernetzen der geschäumten Mischung unter Bildung eines schaumförmigen Hydrogels und gegebenenfalls Einstellen des Wassergehalts des schaumförmigen Polymerisats auf 1 bis 60 Gew.-%.

2. Schaumstoffe aus wasserabsorbierenden basischen Polymeren nach Anspruch 1, **dadurch gekennzeichnet, daß** man als basische Polymere vinylamineinheiten enthaltende Polymere, Vinylguanidineinheiten enthaltende Polymere, Dialkylaminoalkyl(meth)acrylamideinheiten enthaltende Polymere, Polyethylenimine, mit Ethylenimin gepfropfte Polyamidoamine und Polydiallyldimethylammoniumchloride einsetzt.

3. Schaumstoffe aus wasserabsorbierenden basischen Polymeren nach Anspruch 1 oder 2, **dadurch gekennzeichnet, daß** man als basische Polymerisate Vinylamineinheiten enthaltende Polymere, Polyvinylguanidine und Polyethylenimine einsetzt.

4. Schaumstoffe aus wasserabsorbierenden basischen Polymeren nach Anspruch 1, **dadurch gekennzeichnet, daß** man als basische Polymerisate Polyvinylamine und/oder zu 10 bis 100 % hydrolysierte Poly-N-Vinylformamide einsetzt.

5. Schaumstoffe aus wasserabsorbierenden basischen Polymeren nach einem der Ansprüche 1 bis 4, **dadurch gekennzeichnet, daß** die Oberfläche der Schaumstoffe nachvernetzt ist.

6. Schaumstoffe nach einem der Ansprüche 1 bis 5, **dadurch gekennzeichnet, daß** die wasserabsorbierenden basischen Polymeren zusätzlich feinteilige, wasserabsorbierende, saure Polymere enthalten, wobei die Polymermischung 10 bis 90 Gew.-% des wasserabsorbierenden sauren Polymeren enthält.

7. Schaumstoffe nach einem der Ansprüche 1 bis 6, **dadurch gekennzeichnet, daß** sie als wasserabsorbierende saure Polymere vernetzte Acrylsäuren mit einem Teilchendurchmesser von 10 bis 2000 μm enthalten.

8. Verfahren zur Herstellung von Schaumstoffen aus wasserabsorbierenden basischen Polymeren, **dadurch gekennzeichnet, daß** man

    (I) eine vernetzbare wäßrige Mischung schäumt, die

(a) mindestens ein basisches Polymer, dessen basische Gruppen gegebenenfalls neutralisiert sind,
(b) mindestens einen Vernetzer,
(c) mindestens ein Tensid,
(d) gegebenenfalls mindestens einen Lösevermittler,
(e) gegebenenfalls Verdicker, Schaumstabilisatoren, Füllstoffe, Fasern und/oder Zellkeimbildner und
(f) gegebenenfalls teilchenförmige, wasserabsorbierende saure Polymere

enthält, wobei man zum Schäumen ein gegenüber Radikalen inertes Gas unter einem Druck von 2 bis 400 bar in der vernetzbaren wäßrigen Mischung löst und sie anschließend auf Atmosphärendruck entspannt oder wobei das Schäumen durch Dispergieren von feinen Blasen eines gegenüber Radikalen inerten Gases erfolgt, und
(II) die geschäumten Mischung unter Bildung eines schaumförmigen Hydrogels vernetzt und gegebenenfalls den Wassergehalt des schaumförmigen Polymerisats auf 1 bis 60 Gew.-% einstellt.

**9.** Verfahren nach Anspruch 8, **dadurch gekennzeichnet, daß** man pro Gewichtsteil eines basischen Polymeren 0,05 bis 20 Gewichtsteile eines sauren wasserabsorbierenden Polymeren mit einem Neutralisationsgrad von 0 bis 75 Mol-% einsetzt.

**10.** Verfahren nach Anspruch 8 oder 9, **dadurch gekennzeichnet, daß** die vernetzbare wäßrige Mischung 0,1 bis 30 Gew.-% eines Kohlenwasserstoffs enthält.

**11.** Verwendung der Schaumstoffe gemäß den Ansprüchen 1 bis 7 in Hygieneartikeln zur Absorption von Körperflüssigkeiten, in Verbandmaterial zur Abdeckung von Wunden, als Dichtungsmaterial, als Verpackungsmaterial, als Bodenverbesserungsmittel, als Bodenersatzstoff, zur Entwässerung von Schlämmen, zur Absorption saurer wäßriger Abfälle, zum Eindicken wäßriger Lacke bei der Entsorgung von Restmengen an Lacken, zur Entwässerung von wasserhaltigen Ölen oder Kohlenwasserstoffen oder als Material für Filter in Lüftungssystemen.

## Claims

**1.** A foam composed of a water-absorbing basic polymer, obtainable by

(I) foaming a crosslinkable aqueous mixture comprising

(a) at least one basic polymer whose basic groups have if appropriate been neutralized,
(b) at least one crosslinker,
(c) at least one surfactant,
(d) if appropriate at least one solubilizer,
(e) if appropriate thickeners, foam stabilizers, fillers, fibers and/or cell nucleators, and
(f) if appropriate particulate water-absorbing acidic polymers,
by dissolving a gas which is inert toward free radicals in the crosslinkable aqueous mixture under a pressure from 2 to 400 bar and subsequently decompressing the crosslinkable aqueous mixture to atmospheric or by dispersing fine bubbles of a gas which is inert toward free radicals, and

(II) crosslinking the foamed mixture to form a hydrogel foam and if appropriate adjusting the water content of the polymer foam to 1-60% by weight.

**2.** The foam according to claim 1 wherefor the basic polymers used are polymers comprising vinylamine units, polymers comprising vinylguanidine units, polymers comprising dialkylaminoalkyl(meth)acrylamide units, polyethyleneimines, ethylenimine-grafted polyamidoamines and polydiallyldimethylammonium chlorides.

**3.** The foam according to claim 1 or 2 wherefor the basic polymers used are polymers comprising vinylamine units, polyvinylguanidines and polyethyleneimines.

**4.** The foam according to claim 1 wherefor the basic polymers used are polyvinylamines and/or up to 10-100% hydrolyzed poly-N-vinylformamides.

**5.** The foam according to any of claims 1 to 4 whose surface has been postcrosslinked.

6. The foam according to any of claims 1 to 5 wherein the water-absorbing basic polymers additionally comprise finely divided water-absorbing acidic polymers, the polymer mixture comprising from 10 to 90% by weight of water-absorbing acidic polymers.

7. The foam according to any of claims 1 to 6 wherein the water-absorbing acidic polymers are crosslinked acrylic acids having a particle diameter from 10 to 2000 μm.

8. A process for producing a foam composed of a water-absorbing basic polymer, which comprises

(I) foaming a crosslinkable aqueous mixture comprising

(a) at least one basic polymer whose basic groups have if appropriate been neutralized,
(b) at least one crosslinker,
(c) at least one surfactant,
(d) if appropriate at least one solubilizer,
(e) if appropriate thickeners, foam stabilizers, fillers, fibers and/or cell nucleators, and
(f) if appropriate particulate water-absorbing acidic polymers,

by dissolving a gas which is inert toward free radicals in the crosslinkable aqueous mixture under a pressure from 2 to 400 bar and subsequently decompressing the crosslinkable aqueous mixture to atmospheric or by dispersing fine bubbles of a gas which is inert toward free radicals, and
(II)crosslinking the foamed mixture to form a hydrogel foam and if appropriate adjusting the water content of the polymer foam to 1-60% by weight.

9. The process according to claim 8 wherein from 0.05 to 20 parts by weight of an acidic water-absorbing polymer having a degree of neutralization from 0 to 75 mol% are used per part by weight of a basic polymer.

10. The process according to claim 8 or 9 wherein the crosslinkable aqueous mixture comprises from 0.1 to 30% by weight of a hydrocarbon.

11. The use of the foam acording to claims 1 to 7 in hygiene articles to absorb body fluids, in dressing material to cover wounds, as a sealing material, as a packaging material, as a soil improver, as a soil substitute, to dewater sludges, to absorb aqueous acidic wastes, to thicken waterborne paints or coatings in the course of disposing of residual quantities thereof, to dewater water-containing oils or hydrocarbons or as a material for filters in ventilation systems.

## Revendications

1. Mousses à base de polymères basiques absorbant l'eau, **caractérisées en ce que** les mousses peuvent être préparées par

(I) moussage d'un mélange aqueux réticulable, qui contient

(a) au moins un polymère basique dont les groupes basiques sont éventuellement neutralisés,
(b) au moins un agent de réticulation,
(c) au moins un agent tensioactif,
(d) éventuellement au moins un tiers-solvant,
(e) éventuellement un épaississant, des stabilisateurs de mousse, des matières de remplissage, des fibres et/ou des germes cellulaires, et
(f) éventuellement des polymères acides absorbant l'eau, en forme de particules,
en dissolvant, pour le moussage, un gaz inerte vis-à-vis des radicaux dans le mélange aqueux réticulable, sous une pression de 2 à 400 bars, et en le détendant ensuite à la pression atmosphérique, ou en effectuant le moussage par dispersion de fines bulles d'un gaz inerte vis-à-vis des radicaux, et

(II) par réticulation du mélange expansé avec formation d'un hydrogel en forme de mousse et éventuellement ajustement de la teneur en eau du polymère en forme de mousse à 1 jusqu'à 60 % en poids.

2. Mousses à base de polymères basiques absorbant l'eau suivant la revendication 1, **caractérisées en ce que**,

comme polymères basiques, on met en oeuvre des polymères contenant des unités vinylamine, des polymères contenant des unités vinylguanidine, des polymères contenant des unités dialkylaminoalkyl(méth)acrylamide, des polyéthylèneimines, des polyamidoamines greffées avec de l'éthylèneimine et des chlorures de polydiallyldiméthylammonium.

3. Mousses à base de polymères basiques absorbant l'eau suivant la revendication 1 ou 2, **caractérisées en ce que**, comme polymères basiques, on met en oeuvre des polymères contenant des unités vinylamine, des polyvinylguanidines et des polyéthylèneimines.

4. Mousses à base de polymères basiques absorbant l'eau suivant la revendication 1, **caractérisées en ce que**, comme polymères basiques, on met en oeuvre des polyvinylamines et/ou des poly-N-vinylformamides hydrolysés à 10 jusqu'à 100 %.

5. Mousses à base de polymères basiques absorbant l'eau suivant l'une des revendications 1 à 4, **caractérisées en ce que** la surface des mousses est postréticulée.

6. Mousses suivant l'une des revendications 1 à 5, **caractérisées en ce que** les polymères basiques absorbant l'eau contiennent en supplément des polymères acides absorbant l'eau, finement divisés, le mélange de polymères contenant 10 à 90 % en poids du polymère acide absorbant l'eau.

7. Mousses suivant l'une des revendications 1 à 6, **caractérisées en ce que**, comme polymères acides absorbant l'eau, elles contiennent des acides acryliques réticulés présentant un diamètre de particule de 10 à 2000 μm.

8. Procédé de préparation de mousses à base de polymères basiques absorbant l'eau, **caractérisé en ce que**

(I) on fait mousser un mélange aqueux réticulable qui contient

(a) au moins un polymère basique dont les groupes basiques sont éventuellement neutralisés,
(b) au moins un agent de réticulation,
(c) au moins un agent tensioactif,
(d) éventuellement au moins un tiers-solvant,
(e) éventuellement un épaississant, des stabilisateurs de mousse, des matières de remplissage, des fibres et/ou des germes cellulaires, et
(f) éventuellement des polymères acides absorbant l'eau, en forme de particules,

en dissolvant, pour le moussage, un gaz inerte vis-à-vis des radicaux dans le mélange aqueux réticulable, sous une pression de 2 à 400 bars, et en le détendant ensuite à la pression atmosphérique, ou en effectuant le moussage par dispersion de fines bulles d'un gaz inerte vis-à-vis des radicaux, et
(II) on réticule le mélange expansé avec formation d'un hydrogel en forme de mousse et éventuellement on ajuste la teneur en eau du polymère en forme de mousse à 1 jusqu'à 60 % en poids.

9. Procédé suivant la revendication 8, **caractérisé en ce qu'**on met en oeuvre, par partie en poids d'un polymère basique, 0,05 à 20 parties en poids d'un polymère acide absorbant l'eau avec un degré de neutralisation de 0 à 75 % molaires.

10. Procédé suivant la revendication 8 ou 9, **caractérisé en ce que** le mélange aqueux réticulable contient 0,1 à 30 % en poids d'un hydrocarbure.

11. Utilisation des mousses suivant les revendications 1 à 7 dans des articles d'hygiène, pour l'absorption de liquides corporels, dans un matériel de pansement pour couvrir des plaies, comme matière d'étanchéité, comme matière d'emballage, comme produit d'amélioration des sols, comme remplacement de sol, pour la déshydratation de boue, pour l'absorption de déchets aqueux acides, pour l'épaississement de vernis aqueux lors de l'élimination de quantités résiduelles de vernis, pour la déshydratation d'huiles ou d'hydrocarbures contenant de l'eau ou comme matière pour des filtres dans des systèmes d'aération.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0858478 B
- WO 9944648 A
- WO 0052087 A
- WO 9731600 A
- US 5981689 A
- US 6121409 A
- US 5962578 A
- US 6087448 A
- US 6222091 B
- WO 0063295 A
- US 6025404 A
- US 4421602 A
- US 5334287 A
- EP 0216387 A
- DE 2434816 B
- US 4144123 A
- DE 2916356 A
- EP 0025515 A
- DE 4028285 A
- US 3977923 A
- EP 873371 A
- EP 0276464 A
- US 3810834 A
- GB 1411063 A
- US 4818795 A


### In der Beschreibung aufgeführte Nicht-Patentliteratur


- **R.Y. LOCHHEAD ; W.R. FRON.** *Cosmetics & Toiletries,* Mai 1993, vol. 108, 95-135
- Rheological Additives'' in D. Laba (ed.) ''Rheological Properties of Cosmetics and Toiletries. **M.T. CLARKE.** Cosmetic Science and Technology Series. Marcel Dekker Inc, 1993, vol. 13
- **H. FIKENTSCHER.** *Cellulose-Chemie,* 1932, vol. 13, 52-63 7174